# EUROPÄISCHE PATENTSCHRIFT

(11) **EP 2 650 510 B1**
(45) Veröffentlichungstag und Bekanntmachung des Hinweises auf die Patenterteilung: **28.08.2019**
(21) Anmeldenummer: 13162643.4
(22) Anmeldetag: 08.04.2013
(51) Int. Cl.: F02C 5/08, F02C 7/12

(54) **Wärmekraftmaschine für Freikolbenverdichter**
Thermal engine for free piston compressor
Moteur thermique pour compresseur à piston libre

(30) Priorität: 13.04.2012 DE 102012206123
(43) Veröffentlichungstag der Anmeldung: 16.10.2013
(73) Patentinhaber: MTU Aero Engines AG, 80995 München (DE)
(72) Erfinder: Klingels, Hermann, 85221 Dachau (DE)

(56) Entgegenhaltungen:
- WO-A2-2008/065078
- US-A- 2 461 245
- US-A- 4 481 772

## Beschreibung

Die Erfindung betrifft eine Wärmekraftmaschine mit einem Freikolbenverdichter gemäß dem Oberbegriff des Anspruchs 1 und einen Freikolbenverdichter.

Gas- oder Dampfturbinen werden beispielsweise zur Energieerzeugung oder als Antriebsaggregate beispielsweise in Flugzeugen eingesetzt und weisen wenigstens einen Verdichter, eine Brennkammer und wenigstens eine Turbine auf. Die zunehmend steigenden Anforderungen an die Leistung, das Gewicht, den Wirkungsgrad, den Kraftstoffverbrauch und die Emissionsabgabe lassen sich mit herkömmlichen Turbomaschinen zunehmend schwerer sind, nicht erfüllen. Zur Erfüllung dieser Anforderungen sind aus dem Stand der Technik bereits hybride Turbinen bekannt, in denen eine Turbine mit einem Freikolbenverdichter kombiniert ist.

In der DE 28 46 597 wird eine Wärmekraftmaschine offenbart, in der ein Freikolbenverdichter und eine Gasturbine eingesetzt werden. Die Gasturbine weist zwei Niederdruckverdichter, zwei Turbinen und eine Brennkammer auf. Ein Niederdruckverdichter ist mit dem Freikolbenverdichter verbunden. Der Freikolbenverdichter weist einen Zylinder mit einem Zylinderraum und einen Motorkolben und einen Verdichterkolben zum Verdichten der vom Niederdruckverdichter der Turbomaschine kommenden Luft auf. Die durch den Verdichterkolben verdichtete Luft wird vollständig in den Zylinder geführt. In dem Zylinderraum erfolgt die Zündung eines Kraftstoff-Luftgemisches. Das bei der Verbrennung entstandene Abgas wird in der ersten Turbine entspannt, mit der im zweiten Niederdruckverdichter verdichteten Luft vermischt, der Brennkammer der Gasturbine zugeführt und anschließend in der zweiten Turbine entspannt. Ein Nachteil dieser Lösung besteht darin, dass die Wärmekraftmaschine einen komplexen Aufbau aufweist.

Die WO 2008/065078 A2 betrifft ein Energiewandlersystem umfassend zumindest einen Verdichter und eine druckgasmäßig mit diesem verbundene Turbine mit Turbinenwelle, wobei der Verdichter ein Vorverdichter zumindest eines Freikolbenmotors ist, der zumindest einen in einem Zylinderraum hin und her bewegbaren und diesen in zwei Verbrennungskammern unterteilenden Kolben aufweist und druckgasmäßig mit der Turbine verbunden ist.

Das US-Patent 2,461,245 betrifft ein Kraftwerk mit einer Anzahl von Freikolbengeneratoren, die druckbeaufschlagtes Gas produzieren, das durch eine Brennkammer einer Turbine strömt. Die Turbine treibt einen Propeller und das Abgas von der Turbine wird durch eine Druckdüse abgeführt.

Das US-Patent 4,481,772 offenbart ein Kraftwerk, das einen Freikolbengasgenerator mit Kompressionskammern und Motorzylindern aufweist. Eine Anordnung weist Antriebskolben auf, die gleitend in den Motorzylindern und Kompressionskammern aufgenommen sind, um jeweils eine Kompressionskammer mit variablem Volumen zu definieren. Ein Rotationskompressor liefert Luft bei überatmosphärischem Druck an die Kompressionskammern, die in einen erste und einen zweiten Satz aufgeteilt sind. Die Auslässe des ersten Satzes liefern Luft an die Motorzylinder, der zweite Satz liefer druckbeaufschlagte Luft an das Abgas, und die Mischung ist einer Gasturbine zugänglich. Die Temperatur der Mischung der heißen Luft und des Abgases wird durch einen Wärmetauscher und eine Kompressionskammer erhöht, bevor es an die Turbine geliefert wird.

Der vorliegenden Erfindung liegt die Aufgabe zugrunde eine verbesserte Wärmekraftmaschine und einen verbesserten Freikolbenverdichter bereitzustellen.

Zur Lösung dieser Aufgabe ist eine Wärmekraftmaschine nach dem Oberbegriff des Anspruchs 1 durch dessen kennzeichnende Merkmale weitergebildet.

Ein Ausgangspunkt der vorliegenden Erfindung ist die Idee, einen Teil des Fluidstroms eines Freikolbenverdichters zum Temperieren, insbesondere Kühlen, einer mit dem Freikolbenverdichter gekoppelten Turbomaschine zu verwenden. Die Idee basiert auf dem Problem, dass das bei der Verbrennung im Freikolbenverdichter entstandene Abgas bisher nicht der Brennkammer einer Turbomaschine zugeführt werden kann, da die Temperatur innerhalb der Brennkammer sonst so hoch wäre, dass die Brennkammer beschädigt werden würde.

Ein weiterer Ausgangspunkt der vorliegenden Erfindung ist es eine erfindungsgemäße (Hybrid)-Wärmekraftmaschine mit einer Turbomaschine zu kombinieren, insbesondere eine Gasturbine, bei der die Wärmezufuhr bei annähernd konstantem Druck stattfindet mit einer Wärmekraftmaschine mit innerer Verbrennung, bei der die Wärmezufuhr, zuminderst annähernd, bei konstantem Volumen erfolgt und deren Nutzleistung an eine Arbeitsmaschine, insbesondere einen Verdichter, abgegeben wird. Der Verdichter wird zur Druckerhöhung eines vom Turboverdichter der Gasturbine vorverdichteten Fluidstromes, insbesondere Luft, verwendet. Die Leistungsabgabe der Gasturbine erfolgt, wie bei herkömmlichen Gasturbine, in Form von Wellenleistung und/ oder Strahlleistung.

Nach einem ersten Aspekt der vorliegenden Erfindung weist eine erfindungsgemäße Wärmekraftmaschine eine Turbomaschine, insbesondere eine Gasturbine in Einwellen- oder Mehrwellenbauart, und wenigstens einen Freikolbenverdichter auf, der mit der Turbomaschine verbunden ist. Die Turbomaschine weist wenigstens einen Verdichter, wenigstens eine Brennkammer und wenigstens eine Turbine auf. Der Freikolbenverdichter weist wenigstens einen Verdichterkolben und einen Zylinder auf, der einen Zylinderraum und einen Motorkolben aufweist. Der Freikolbenverdichter ist derart ausgebildet, dass nur ein Teil des vom Verdichterkolben geförderten Fluids, insbesondere Luft, der im Folgenden als erster Fluidstrom bezeichnet wird, zu dem Zylinder geführt wird. Ein anderer Fluidteil, insbesondere der restliche Fluidteil, der im Folgenden als zweiter Fluidstrom bezeichnet wird, wird erfindungsgemäß zum Temperieren, insbesondere Kühlen, eines Turbomaschinenteils, insbesondere der Brennkammer und/oder der Turbine, eingesetzt. Die Aufteilung des durch den Verdichterkolben geförderten Fluids in den ersten und zweiten Fluidstrom kann derart erfolgen, dass die Temperatur des Fluidstroms, der der Turbomaschine zugeführt wird, so hoch wie möglich ist und andererseits eine ausreichende Kühlung sichergestellt ist.

Ferner kann ein Teil des vom Verdichter geförderten Fluidstromes zum Temperieren, insbesondere Kühlen, der Wärmekraftmaschine (wie z.B. Freikolbenverdichter) und/ oder der mit dieser gekoppelten Turbomaschine zu verwenden. Die Idee basiert auf der Notwendigkeit, dass zum Temperieren, insbesondere Kühlen, eines Turbomaschinenteils der erfindungsgemäßen Hybrid- Wärmekraftmaschine, insbesondere deren Brennkammer und deren Turbine, ein Fluidstrom mit ausreichendem Druck bereitgestellt werden muss, welcher in dieser Kombination vom Verdichter, der von der angekoppelten Wärmekraftmaschine angetrieben wird, geliefert wird.

Durch die Verwendung einer Kombination eines Turbomaschinenprozesses, insbesondere eines Joule-Prozesses in der Gasturbine, und eines Diesel-Prozesses, insbesondere eines Seiliger-Prozesses, im Freikolbenverdichter lässt sich ein effizienter Kreisprozess für die Wärmekraftmaschine realisieren. Dies ist möglich, weil in der erfindungsgemäßen Wärmekraftmaschine ein großer Teil der Verdichtungsarbeit durch den Freikolbenverdichter bereitgestellt wird, der einen höheren Wirkungsgrad als die Turbomaschine aufweist. Des Weiteren verringert sich durch die Verwendung eines Freikolbenverdichters zum Verdichten des Fluids das Enthalpiegefälle der Turbine, das zur Bereitstellung der Verdichterarbeit im Verdichter benötigt wird. Aufgrund des geringeren Enthalpiegefälles kann die Turbomaschine mit einem geringeren Massendurchsatz betrieben werden, um die erforderliche Nutzleistung zu erzeugen. Folglich können der Verdichter, die Turbine und der Freikolbenverdichter vorteilhafterweise kleiner und leichter ausgeführt werden. Ein weiterer Vorteil eines effizienteren Kreisprozesses kann darin bestehen, dass der CO₂-Ausstoß der Wärmekraftmaschine geringer ist. Indem der zweite Fluidstrom zum Temperieren, insbesondere Kühlen, eines Turbomaschinenteils, insbesondere der Brennkammer und der Turbine eingesetzt wird, ist eine einfache Kühlung der zu kühlenden Turbomaschinenteile möglich.

Des Weiteren kein ein Vorteil der Erfindung darin bestehen, dass aufgrund der hohen Beschleunigungen des Motorkolbens des Freikolbenverdichters im oberen Totpunkt die Verweilzeit des im Zylinderraum befindlichen Kraftstoff-Fluidgemisches kurz ist. Damit kann eine hohe NOx-Bildung während der Verbrennung in dem Freikolbenverdichter verhindert werden. Ein weiterer Vorteil der Erfindung kann darin bestehen, dass das aus der Brennkammer der Turbomaschine austretende Brennkammerabgas einen Druck, insbesondere im Wesentlichen von 25 bar, aufweist, der kleiner ist als ein Brennkammerdruck in einer Turbomaschine ohne Freikolbenverdichter. Der geringere Brennkammerabgasdruck wirkt sich günstig auf die NOx Bildung aus.

Als Freikolbenverdichter wird im Sinne der Erfindung insbesondere eine Vorrichtung verstanden, in der eine innere Verbrennung erfolgt und hydraulische, pneumatische und/oder elektrische Energie bereitgestellt wird. Des Weiteren wird als Freikolbenverdichter eine Vorrichtung verstanden, in der sich der Verdichter- und Motorkolben ohne eine kinematische Zwangsführung, wie z.B. durch einen Kurbeltrieb, zwischen variablen Totpunkten frei bewegen kann. Wobei der Freikolbenverdichter in Einzelkolben-, Gegenkolben- oder als Doppelkolbenbauweise ausgebildet sein kann. Als Wärmekraftmaschine wird im fachüblichen Sinne eine Vorrichtung verstanden, die Wärme in mechanische Energie umwandeln kann.

In einer bevorzugten Ausführung der Erfindung kann zwischen dem wenigstens einen Verdichter und dem Freikolbenverdichter ein erster Zwischenkühler angeordnet sein. Der Zwischenkühler kühlt das vom Verdichter zu einem Verdichtungsraum des Freikolbenverdichters zugeführte Fluid. Dabei kann eine Ausgleichskammer zwischen dem Zwischenkühler und dem Verdichtungsraum oder zwischen dem Verdichter und dem Zwischenkühler vorgesehen sein. Mittels der Ausgleichskammer kann ein gleichmäßiger Fluidmassenstrom in den Freikolbenverdichter sichergestellt werden.

Der erste Fluidstrom kann über eine Zylinderabzweigung einer Zylinderleitung, die den Verdichtungsraum mit dem Zylinder verbindet, dem Zylinder zugeführt werden. Die Zylinderleitung kann derart ausgebildet sein, dass sie konzentrisch um den Zylinderraum verläuft. Dabei kann der erste Fluidstrom in der Zylinderabzweigung vor dem Eintritt in den Zylinder in weitere Fluidströme aufgeteilt werden. So kann zumindest ein Teil des ersten Fluidstroms in den Zylinderraum zugeführt werden und dient dort als Spülmedium zum Ausspülen des Zylinderraums oder als Betriebsmedium zum Vermischen mit dem Kraftstoff im Zylinderraum. Ein anderer Fluidteil, insbesondere der restliche Fluidteil, des ersten Fluidstroms, der im Folgenden als Freikolbenverdichterkühlfluid bezeichnet wird, kann zum Kühlen von Freikolbenverdichterbauteilen eingesetzt werden. Folglich kann vorteilhafterweise auf eine aufwendige Kühlung des Freikolbenverdichters mittels eines Kühlsystems mit einer Kühlmittelpumpe, einem Kühlmittel, etc. verzichtet werden.

Ferner kann die Wärmekraftmaschine ist derart ausgebildet, dass das vom Verdichterkolben geförderte Fluid durch eine Verdichterausgangsleitung geleitet wird und von dort in eine Zylinderleitung und eine/ mehrere Kühlleitung(en) verzweigt. Nur ein Teil des Fluidstroms insbesondere Luft, der im Folgenden als Zylinderfluidstrom bezeichnet wird, wird durch die Zylinderleitung zu dem Zylinder geführt und dient dort als Spülmedium zum Ausspülen des Zylinderraums und/ oder als Betriebsmedium zum Vermischen mit dem Kraftstoff im Zylinderraum.

Ein weiterer Vorteil einer Kühlung des Freikolbenverdichters mittels des Freikolbenverdichterkühlfluids kann darin bestehen, dass der übertragene Wärmestrom größer ist als bei einer aus dem Stand der Technik bekannten Kühlung mittels des Kühlmittels. Das Freikolbenverdichterkühlfluid weist eine höhere Temperatur auf als das Kühlmittel, so dass sich in einer bevorzugten Ausführung eine höhere mittlere Wandtemperatur einstellt als bei einer Kühlung mit einem Kühlmittel. Vorteilhafterweise sind zu kühlenden Bauteile und/oder die zu den zu kühlenden Bauteilen führenden Kanäle bzw. Leitungen derart ausgebildet, dass der Wärmübergangskoeffizient stärker ansteigt als die Temperaturdifferenz zwischen der Wand und dem Freikolbenverdichterkühlfluid abfällt, wodurch der übertragene Wärmestrom ansteigt.

Dabei kann in der Zylinderleitung zwischen dem Zylinder und dem Verdichtungsraum ein zweiter Zwischenkühler angeordnet sein. Der zweite Zwischenkühler bewirkt, dass das dem Zylinder zugeführte Fluid eine ausreichend niedrige Temperatur aufweist, so dass die zu kühlenden Bauteile des Freikolbenverdichters sicher gekühlt werden können. Bei den zu kühlenden Freikolbenverdichterteilen kann es sich beispielsweise um den Zylinder, den Motorkolben, einen Zylinderkopf und/oder Einlass- und/ oder Auslassventile handeln, die in einer Zylinderraumwand oder einer Verdichtungsraumwand angeordnet sein können.

Sowohl das Freikolbenverdichterkühlfluid als auch ein im Zylinderraum entstandenes Freikolbenverdichterabgas können über eine Turbomaschinenleitung einem Turbomaschinenteil, insbesondere der Brennkammer und/oder der Turbine zugeführt werden. Hierzu weist die Turbomaschinenleitung eine Abgasleitung zum Führen des Freikolbenverdichterabgases und eine Kühlleitung zum Führen des Freikolbenverdichterkühlfluids auf. Die Kühlleitung kann die Abgasleitung wenigstens zum Teil umschließen und zu dieser konzentrisch angeordnet sein. Die Abgasleitung kann wärmeisoliert sein. So kann beispielsweise eine Thermoschutzschicht zur Wärmeisolation eingesetzt werden und/oder die Abgasleitung kann aus Keramik bestehen und/oder doppelwandig ausgebildet sein. Die Kühlleitung kann derart ausgebildet sein, dass das Freikolbenverdichterfluid in die Brennkammer zugeführt wird, die Brennkammer und/oder die Turbine umströmt und/oder mit dem Brennkammerabgas gemischt wird. Des Weiteren kann die Kühlleitung derart ausgebildet sein, dass das Freikolbenverdichterfluid durch einen nachfolgend erläuterten ersten Abgaswärmetauscher strömt, bevor es zu den zu kühlenden Turbomaschinenteilen geführt wird.

In der Turbomaschinenleitung können elastische Elemente, wie z.B. Kompensatoren vorgesehen sein. Diese ermöglichen eine weitestgehende Entkoppelung der unterschiedlichen thermischen und dynamischen Bewegungen der einzelnen Bauteile der Freikolbenverdichter und/oder Turbomaschinenteile.

Vorteilhafterweise kann durch die Abgasleitung das Freikolbenverdichterabgas der Brennkammer der Turbomaschine direkt zugeführt werden. Dadurch ist es möglich, dass in der Brennkammer dem bereits erhitzten Freikolbenverdichterabgas zusätzlich Wärme zugeführt wird, was sich thermodynamisch günstig auf den Kreisprozess auswirkt. So erhöht sich die Enthalpie des Brennkammerabgases, der der Turbine zugeführt wird. Ein weiterer Vorteil der erfindungsgemäßen Wärmekraftmaschine kann darin bestehen, dass durch den ersten Zwischenkühler, den im Freikolbenverdichter ablaufenden Diesel-Prozess und die Zufuhr des Freikolbenverdichterabgases in die Brennkammer der Turbomaschine eine Annäherung des Kreisprozesses der erfindungsgemäßen Wärmekraftmaschine an den Carnot-Prozess erreicht wird. Des Weiteren wirkt es sich günstig auf die Effizienz der Wärmekraftmaschine aus, wenn die Verbrennung des Kraftstoff-Fluidgemisches im Zylinderraum auf hohem mittlerem Druckniveau, insbesondere 230 bar, und zumindest zum Teil bei konstantem Volumen erfolgt.

Des Weiteren kann durch die Zufuhr des Freikolbenverdichterabgases in die Brennkammer und eine dortige Verbrennung eine Nachoxidation der Freikolbenverdichterabgasschadstoffe, insbesondere Ruß, Kohlenmonoxid, unverbrannte Kohlenwasserstoffe erreicht werden. Dies ist vorteilhaft, wenn sich im Freikolbenverdichter aufgrund der Vorverdichtung und dem nach oben begrenzten Spitzendruck ein begrenztes Verdichtungsverhältnis und damit ein großes Kompressionsvolumen ergeben. Im Ergebnis kann durch die Zufuhr des Freikolbenverdichterabgases in die Brennkammer der Turbomaschine eine Wärmekraftmaschine mit verbesserten Emissionswerten erreicht werden.

In einer vorteilhaften Ausgestaltung der Erfindung kann die Zylinderleitung über mehrere Abzweigungen den Verdichtungsraum des Freikolbenverdichters mit dem Turbomaschinenteil, insbesondere der Brennkammer und/oder der Turbine direkt verbinden. So kann über eine Turbomaschinenabzweigung der erste Fluidstrom der Turbomaschine derart zugeführt werden, dass der erste Fluidstrom in die Brennkammer eintritt, die Brennkammer und/oder die Turbine umströmt und/oder mit dem Brennkammerabgas gemischt wird. Des Weiteren kann der erste Fluidstrom über eine Brennkammerabzweigung der Brennkammer direkt zugeführt werden. Der erste Fluidstrom weist vorzugsweise eine niedrige Temperatur, insbesondere kleiner oder gleich 700K, und einen Druck auf, der größer ist als der Brennkammerdruck. Aufgrund der Temperatur- und Druckwerte des ersten Fluidstroms kann eine mager vorgemischte und vorverdampfte Gemischaufbereitung ("Lean Premixed Prevaporised") in der Brennkammer erzielt werden, was sich insbesondere auf die NOx Reduktion günstig auswirkt.

Des Weiteren kann ein von dem Verdichter der Turbomaschine abgezweigter Verdichterfluidstrom zum Kühlen der Brennkammer und/oder der Turbine eingesetzt werden. Der Verdichterfluidstrom kann über eine Verdichterleitung dem Turbomaschinenteil zugeführt werden.

In einer bevorzugten Ausführung der Erfindung ist zwischen dem Freikolbenverdichter und der Brennkammer eine Brennkammerausgleichskammer angeordnet, die mit der Brennkammer verbunden ist. Die Brennkammerausgleichskammer kann als eine die Brennkammer umlaufende Ringleitung, insbesondere ein Halbring oder ein Vierteilring, ausgebildet sein. Durch die Brennkammerausgleichskammer wird sichergestellt, dass der Brennkammer ein kontinuierlicher Fluidstrom zugeführt wird. Die Brennkammerausgleichskammer kann mit der Zylinderleitung und/ oder der Turbomaschinenleitung verbunden sein.

In einer vorteilhaften Ausgestaltung der Erfindung kann der zweite Fluidstrom einem ersten Abgaswärmetauscher zugeführt werden. Der erste Abgaswärmetauscher ist an dem von dem Verdichter entfernten Ende der Turbine angeordnet und ermöglicht einen Wärmetausch zwischen dem Turbinenabgas und dem zweiten Fluidstrom. Im Ergebnis wird der zweite Fluidstrom aufgewärmt und im Anschluss dem zu kühlenden Turbomaschinenteil, insbesondere der Brennkammer und/ oder Turbine zugeführt. Der zweite Fluidstrom kann derart geführt werden, dass er sich in einem Brennraum der Brennkammer mit dem mittels der Zylinderleitung und/ oder Turbomaschinenleitung zugeführten ersten Fluidstroms mischt. Des Weiteren kann der zweite Fluidstrom derart geführt werden, dass er Turbomaschinenteile, insbesondere die Brennkammer und/ oder Turbomaschine umströmt und/ oder sich mit dem Brennkammerabgas mischt und danach in der Turbine entspannt wird.

Die Aufwärmung des zweiten Fluidstroms in dem ersten Abgaswärmetauscher ist vorteilhaft, da der zweite Fluidstrom eine niedrigere Temperatur aufweist. Eine direkte Zuführung des zweiten Fluidstroms zu dem Turbomaschinenteil ist aufgrund des hohen Temperaturunterschieds zwischen dem zweiten Fluidstrom und dem zu kühlenden Turbomaschinenteil günstig für die Kühlung des Turbomaschinenteils. Jedoch kann der zuvor genannte hohe Temperaturunterschied auch zu einer eingeschränkten Lebensdauer der zu kühlenden Turbomaschinenteile führen. Zudem wird durch die Zumischung des zweiten Fluidstroms in die Brennkammer eine thermodynamisch nachteilige Temperaturabsenkung des Brennkammerabgases erreicht, was mit zusätzlichem Kraftstoff in der Brennkammer kompensiert werden muss.

Ein anderer Fluidteil, insbesondere der restliche Fluidteil, der im Folgenden als Kühlfluidstrom bezeichnet wird, wird erfindungsgemäß primär zum Temperieren, insbesondere zum Kühlen der Brennkammer und/ oder der Turbine des Turbomaschinenteils verwendet. Die bevorzugte Kühllufttemperatur für den Turbomaschinenteil liegt zwischen 800K - 900K.

In der erfindungsgemäßen Wärmekraftmaschine weist das Turbinenabgas vorteilhafterweise eine höhere Temperatur auf als in einer Wärmekraftmaschine ohne einen Freikolbenverdichter. Um diese Temperatur zu nutzen, kann an dem von dem Verdichter entfernten Ende der Turbine ein zweiter Abgaswärmetauscher angeordnet sein. Der zweite Abgaswärmetauscher kann mit einer Zusatzturbine und mit dem Verdichter verbunden sein und bewirkt einen Wärmetausch zwischen dem Turbinenabgas und einem vom Verdichter abgezweigten Fluidstrom. Ein von dem Verdichter abgezweigter Fluidstrom wird in dem zweiten Abgaswärmetauscher erwärmt und in der weiteren Turbine entspannt. Die in der weiteren Turbine bei der Entspannung abgegebene Arbeit kann an eine Turbomaschinenwelle und/ oder an in der Turbomaschine vorgesehene Nebenaggregate abgeben werden. Vorteilhafterweise erhöht sich der Wirkungsgrad der Wärmekraftmaschine, wenn die hohe Turbinenabgastemperatur zur Arbeitsgewinnung in der Zusatzturbine ausgenutzt wird.

Die Temperatur des vom Verdichterkolben geförderten Fluids kann vorzugsweise niedriger als die bevorzugte Kühlfluidtemperatur für den Turbomaschinenteil sein. Zudem ergibt sich durch die Zumischung des Kühlfluids in den Gaskanal der Turbomaschine, insbesondere im Bereich der Brennkammer und /oder der Turbine eine thermodynamisch nachteilige Temperaturabsenkung des Brennkammerabgases, welche mit zusätzlichem Kraftstoff in der Brennkammer kompensiert werden muss. Eine direkte Zuführung des Kühlfluidstroms vom Verdichter zu dem Turbomaschinenteil ist aufgrund des hohen Temperaturunterschieds zwischen dem Kühlfluidstrom und dem zu kühlenden Turbomaschinenteil einerseits günstig für die Kühlung des Turbomaschinenteils, andererseits ist die Zumischung eines kalten Kühlfluidstroms wie zuvor beschrieben thermodynamisch nachteilig und der hohe Temperaturunterschied kann auch zu einer eingeschränkten Lebensdauer der zu kühlenden Turbomaschinenteile führen, weshalb nur wenige Bereiche der Turbomaschine, mit einem Kühlfluidstrom der direkt vom Verdichter geliefert wird, gekühlt werden können.

Daher wird in einer bevorzugten Ausführung der Erfindung vorgesehen, dass zumindest ein Teil des Kühlfluidstroms für einen Turbomaschinenteil zunächst zum verbrennungsmotorischen Teil des Freikolbenverdichters geleitet und dort zum Temperieren, insbesondere Kühlen, des Freikolbenverdichters, insbesondere dessen Zylinder, Zylinderkopf, Ventile, etc. eingesetzt wird. Folglich kann vorteilhafterweise auf eine aufwendige Kühlung des Freikolbenverdichters mittels eines Kühlsystems mit einer Kühlmittelpumpe, einem Kühlmittel, etc. verzichtet werden. Das Kühlfluid weist eine höhere Temperatur auf als das Kühlmittel, so dass sich in einer bevorzugten Ausführung, an den zu kühlenden Bauteilen des Freikolbenverdichters, eine höhere mittlere Wandtemperatur einstellt als bei einer Kühlung mit einem Kühlmittel. Deshalb ist bei der Kühlung des Freikolbenverdichters mittels des Kühlfluidstroms der übertragene Wärmestrom größer als bei einer aus dem Stand der Technik bekannten Kühlung mittels des Kühlmittels. Ein weiterer Vorteil dieses Kühlsystems für den Freikolbenverdichter ist, dass im Vergleich zu einer direkten Zuführung des Kühlfluids eine höhere Kühlfluidtemperatur für den Turbomaschinenteil erzielt wird und die dem Kühlfluid zugeführte Energie im nachfolgenden Gasturbinenprozess, zumindest Teilweise, in Nutzleistung gewandelt werden kann.

In einer weiteren vorteilhaften Ausgestaltung der Erfindung kann optional, zumindest ein Teil des Kühlfluidstroms der für die Kühlung der Turbomaschine benötigt wird einem ersten Abgaswärmetauscher zugeführt werden. Der erste Abgaswärmetauscher ist an dem von dem Turboverdichter entfernten Ende der Turbine angeordnet und ermöglicht einen Wärmetausch zwischen dem Turbinenabgas und dem Kühlfluid das vom Verdichter zur Turbomaschine geleitet wird. Im Ergebnis wird der Kühlfluidstrom aufgewärmt, bevorzugt auf den bevorzugten Kühlfluidtemperaturbereich und im Anschluss dem zu kühlenden Turbomaschinenteil, insbesondere der Brennkammer und/ oder Turbine zugeführt.

Die Aufteilung des durch den Verdichterkolben geförderten Fluidstroms in den Zylinderfluidstrom und den Kühlfluidstrom bzw. Kühlfluidströme kann derart erfolgen, dass die Temperatur des Kühlfluidstroms, der der Turbomaschine zugeführt wird einerseits so hoch wie möglich ist und anderseits eine ausreichende Kühlwirkung erzielt wird, also im bevorzugten Temperaturbereich liegt und die Turbinenabgastemperatur stromabwärz nach dem ersten Abgaswärmetauscher so niedrig wie möglich ist. Eine Kombination aus den vorgenannten bevorzugten Ausführungen und /oder eine direkte Zuführung der Kühlluft vom Kolbenverdichter zur Turbomaschine ergeben sinnvolle Ausführungsalternativen für die erfindungsgemäße Hybrid- Wärmekraftmaschine.

In einer bevorzugten Ausführung der Erfindung kann zwischen dem wenigstens einen Turboverdichter und dem Freikolbenverdichter, in der Verdichtereingangsleitung, ein erster Zwischenkühler angeordnet sein. Der Zwischenkühler kühlt das vom Turboverdichter zu einem Verdichtungsraum des Freikolbenverdichters zugeführte Fluid. Dabei kann eine Ausgleichskammer zwischen dem Zwischenkühler und dem Verdichtungsraum oder zwischen dem Turboverdichter und dem Zwischenkühler vorgesehen sein.

Generell können in dieser Hybrid- Wärmekraftmaschine an allen gasführenden Verbindungsleitungen zwischen dem wenigstens einen Freikolbenverdichter und der Turbomaschine Ausgleichskammern vorgesehen werden. In Strömungsrichtung vor- oder nach dem ersten Zwischenkühler, vor der Brennkammer und vor- oder nach dem ersten Abgaswärmetauscher sind besonders geeignete Einbausellen für die Ausgleichkammer(n). Die Ausgleichskammer (n) kann als eine Ringleitung, auch als ein Halbring oder Viertelring, ausgebildet sein. Durch die Ausgleichskammer(n) kann ein, zumindest annähernd, gleichmäßiger Fluidmassenstrom für die Turbomaschine sichergestellt werden.

In einer weiteren Ausführung der Erfindung kann in der Verdichterausgangsleitung ein zweiter Zwischenkühler angeordnet sein. Der zweite Zwischenkühler bewirkt, dass das dem Zylinder zugeführte Fluid eine ausreichend niedrige Temperatur aufweist, so dass die zu kühlenden Bauteile des Freikolbenverdichters sicher gekühlt werden können und gleichzeitig die spezifische Verdichtungsarbeit im Dieselprozess verringert wird.

Ein Vorteil der erfindungsgemäßen Hybrid- Wärmekraftmaschine kann darin bestehen, dass durch die Verwendung einer Kombination eines Turbomaschinenprozesses, insbesondere eines Joule-Prozesses in der Gasturbine, und eines Diesel-Prozesses bzw. Seiliger-Prozesses, im Freikolbenverdichter und der Anwendung von Zwischenkühlung und Abgaswärmetausch sowie der Nutzung der Kühlwärme des Freikolbenverdichters ein effizienter Kreisprozess für die Hybrid- Wärmekraftmaschine realisiert wird. Des Weiteren wirkt es sich günstig auf die Effizienz der Hybrid- Wärmekraftmaschine aus, wenn die Verbrennung des Kraftstoff-Fluidgemisches im Zylinderraum des Freikolbenverdichters auf hohem mittlerem Druckniveau und bei annähernd konstantem Volumen erfolgt.

Ein weiterer Vorteil der erfindungsgemäßen Wärmekraftmaschine besteht darin, dass ein großer Teil der gesamten Verdichtungsarbeit durch den Freikolbenverdichter bereitgestellt wird, dadurch verringert sich das Enthalpiegefälle der Turbine, das zur Bereitstellung der Verdichterarbeit für den Turboverdichter benötigt wird. Daraus ergibt sich ein großes Nutzenhalpiegefälle, wodurch die erfindungsgemäße Turbomaschine, im Vergleich zu einer konventionellen Gasturbine, mit einem geringeren Massendurchsatz betrieben werden kann um eine vergleichbare Nutzleistung zu erzeugen. Folglich können der Turboverdichter, die Turbine und der Freikolbenverdichter vorteilhafterweise kleiner und leichter ausgeführt werden. Ein weiterer Vorteil eines effizienteren Kreisprozesses besteht darin, dass der CO₂-Ausstoß der Wärmekraftmaschine geringer ist.

Vorteilhafterweise kann durch die Abgasleitung das Freikolbenverdichterabgas der Brennkammer der Turbomaschine zugeführt werden. Dadurch ist es möglich, dass in der Brennkammer dem bereits erwärmten Freikolbenverdichterabgas zusätzlich Wärme zugeführt wird, was sich thermodynamisch günstig auf den Kreisprozess und auf die spezifische Nutzleistung auswirkt.

Des Weiteren kann durch die Zufuhr des Freikolbenverdichterabgases in die Brennkammer und eine dortige Verbrennung eine Nachoxidation der Freikolbenverdichterabgasschadstoffe, insbesondere Ruß, Kohlenmonoxid und unverbrannte Kohlenwasserstoffe erreicht werden. Dies ist vorteilhaft, wenn sich im Freikolbenverdichter aufgrund der Vorverdichtung und dem nach oben begrenzten Spitzendruck ein begrenztes Verdichtungsverhältnis und damit ein großes Kompressionsvolumen ergeben.

Des Weiteren kann ein Vorteil der Erfindung darin bestehen, dass aufgrund der hohen Beschleunigungen des Motorkolbens des Freikolbenverdichters im oberen Totpunkt die Verweilzeit des Zylinderfluids unter hohem Druck und hoher Temperatur kurz ist. Damit kann eine hohe NOx-Bildung während der Verbrennung in dem Freikolbenverdichter verhindert werden. Ein weiterer Vorteil der Erfindung kann darin bestehen, dass der Druck in der Brennkammer der Turbomaschine niedriger ist als ein Brennkammerdruck in einer Turbomaschine ohne Freikolbenverdichter, dadurch kann auch eine hohe NOx- Bildung bei der Verbrennung in der Gasturbinenbrennkammer verhindert werden.

Des weiteren kann aufgrund der niedrigen Temperatur des vom Verdichterkolben geförderten Fluids ein Teil des Zylinderfluidstroms oder des Kühlfluidstroms, die beide vorzugsweise eine niedrige Temperatur, insbesondere kleiner 700K aufweisen, über eine Brennkammerabzweigung einer Vorrichtung, die eine mager vorgemischte und vorverdampfte Gemischaufbereitung ermöglicht, zugeführt werden und das so aufbereitete Gemisch kann in der Brennkammer gezündet werden. Die schadstoffarme Flamme kann in der Brennkammer als Pilotflamme für eine nach einem sog. "mager Konzept" ausgelegte Brennkammer dienen, was sich insbesondere auf die NOx Reduktion günstig auswirkt.

Im Ergebnis kann durch die zuvor beschriebene Kombination einer Gasturbine mit einem Freikolbenverdichter eine Hybrid- Wärmekraftmaschine mit verbesserten Emissionswerten erreicht werden.

Das Kühlfluid wird über eine Kühlleitung bzw. über mehrere Kühlleitungen zum Turbomaschinenteil geleitet. Die Kühlleitung(en) ist/ sind an das Brennkammergehäuse angeschlossen und versorgt die zu kühlenden Bereiche der Brennkammer und/ oder der Turbine, in gleicher oder ähnlicher Weise wie bei einer konventionellen Gasturbine, mit Kühlluft. Im Falle einer Ausführung mit verschiedenen Kühlleitungen können diese zu einer Kühlleitung zusammengefasst werden. Die Kühlleitung kann die Abgasleitung wenigstens abschnittsweise umschließen und zu dieser konzentrisch angeordnet sein. Die Abgasleitung kann wärmeisoliert sein. So kann beispielsweise eine Thermoschutzschicht zur Wärmeisolation eingesetzt werden und/oder die Abgasleitung kann aus einem keramischen Werkstoff bestehen und /oder doppelwandig ausgebildet sein.

In den Verbindungsleitungen zwischen dem wenigstens einen Freikolbenverdichter und der Turbomaschine können elastische Elemente, wie z.B. Kompensatoren vorgesehen sein. Diese ermöglichen eine weitestgehende Entkoppelung der unterschiedlichen thermischen und dynamischen Bewegungen der einzelnen Bauteile des mindestens einen Freikolbenverdichters und der Turbomaschine.

Des Weiteren kann ein von dem Turboverdichter abgezweigter Verdichterfluidstrom zum Temperieren, insbesondere Kühlen im Niederdruckbereich der Turbine eingesetzt werden. Der Verdichterfluidstrom kann über eine Niederdruckkühlleitung der Turbine zugeführt werden.

In der erfindungsgemäßen Hybrid- Wärmekraftmaschine weist das Turbinenabgas vorteilhafterweise eine höhere Temperatur auf als in einer Wärmekraftmaschine ohne einen Freikolbenverdichter. Um diese Abgasenergie zu nutzen, kann an dem von dem Turboverdichter entfernten Ende der Turbine ein zweiter Abgaswärmetauscher angeordnet sein. Der zweite Abgaswärmetauscher kann mit einer Zusatzturbine und mit dem Turboverdichter verbunden sein und bewirkt einen Wärmetausch zwischen dem Turbinenabgas und einem vom Turboverdichter abgezweigten Fluidstrom. Der abgezweigte Fluidstrom wird in dem zweiten Abgaswärmetauscher erwärmt und in der Zusatzturbine entspannt, die so erzeugte Wellenleistung kann an eine Turbomaschinenwelle und/ oder an Nebenaggregate die für die Turbomaschine und/ oder für die Wärmekraftmaschine vorgesehene sind, abgeben werden. Vorteilhafterweise erhöht sich der Gesamtwirkungsgrad der Hybrid-Wärmekraftmaschine, wenn die hohe Turbinenabgastemperatur zur Arbeitsgewinnung in der Zusatzturbine ausgenutzt wird.

### Hier bin ich

In einer vorteilhaften Ausgestaltung der Erfindung kann die Wärmekraftmaschine wenigstens ein Freikolbenverdichterpaar aufweisen. Die einzelnen Freikolbenverdichter des Freikolbenverdichterpaars sind vorzugsweise miteinander gekoppelt und werden derart geregelt, dass die Verdichterkolben und damit auch die Motorkolben der beiden Freikolbenverdichter in Gegenphase schwingen. Dadurch kann ein Schwingen des Freikolbenverdichterpaars in einer Kolbenachse reduziert werden.

Die einzelnen Freikolbenverdichter der Freikolbenverdichterpaare werden vorzugsweise derart geregelt, dass die Freikolbenverdichterpaare in umgekehrter Gegenphase schwingen, da sich ein Moment in Richtung zu einer Normalen zu der Ebene ausbildet, die durch die Kolbenachsen der beiden Freikolbenverdichter eines Freikolbenverdichterpaares ausgebildet wird. Folglich bewirkt eine zuvor genannte Regelung der Freikolbenverdichterpaare, dass sich die Momente der beiden Freikolbenverdichterpaare in umgekehrte Richtungen ausbilden und damit gegenseitig wenigstens teilweise kompensieren. Die Erfindung ist nicht darauf beschränkt, dass zwei Freikolbenverdichter ein Freikolbenverdichterpaar bilden. Vielmehr können auch mehr als zwei Freikolbenverdichter, insbesondere vier Freikolbenverdichter, eine Gruppe bilden, wobei die Freikolbenverdichter einer Gruppe derart miteinander gekoppelt sind und derart geregelt werden, dass wenigstes im Wesentlichen kein Schwingen einer Gruppe in einer Kolbenachse erfolgt und die Momente von zwei Gruppen in umgekehrte Richtungen weisen.

Der zweite Fluidstrom kann grundsätzlich auch für andere Zwecke als zur Kühlung der Turbomaschinenteile eingesetzt werden. Daher ist nach einem zweiten Aspekt der vorliegenden Erfindung, der mit den vorstehend erläuterten ersten Aspekt kombiniert sein kann, vorgesehen, dass bei einem Freikolbenverdichter, der wenigstens einen Zylinder mit einem Zylinderraum und einem Motorkolben aufweist, ein Teil des vom Verdichterkolben geförderten Fluids dem Zylinderraum zugeführt wird und ein anderer, insbesondere der restliche, Teil am Zylinderraum vorbeigeführt wird. Der dem Zylinderraum zugeführte Teil des Fluidstroms kann wenigstens zum Teil zum Spülen des Zylinderraums und/ oder als Betriebsmedium für die Verbrennung im Zylinderraum dienen. Bei dem am Zylinderraum vorbeigeführten Fluid kann es sich insbesondere nach dem ersten Aspekt um den zweiten Fluidstrom, der dem Turbomaschinenteil zugeführt wird und/oder den Freikolbenverdichterkühlfluidstrom handeln, der zum Temperieren, insbesondere Kühlen, des Freikolbenverdichters verwendet wird. Zusätzlich oder alternativ kann der am Zylinderraum vorbeigeführte Fluidstrom auch anderen als den zuvor genannten Komponenten zugeführt werden.

Ferner besteht eine vorteilhafte Ausgestaltung der Erfindung darin, dass der Freikolbenverdichter eine Laufbuchse aufweist, die wenigstens zum Teil den Motorkolben umschließt und zum Führen des Motorkolbens dient. Die Laufbuchse kann von einer Hülse umschlossen werden, die in radialer Richtung zu einer Hülsenachse mehrere Bohrungen aufweist und konzentrisch zur Laufbuchse verlaufen kann. Die Zylinderleitung kann derart ausgebildet sein, dass zumindest ein Teil des Freikolbenverdichterkühlfluids gegen die zu kühlenden Bauteile des Freikolbenverdichters prallt. Insbesondere kann die Zylinderleitung derart ausgebildet sein, dass zumindest ein Teil des Freikolbenverdichterkühlfluidstroms über die radialen Bohrungen der Hülse strahlförmig gegen die Außenfläche der Laufbuchse prallt. Diese Prallkühlung sorgt für einen hohen Wärmeübergang, welcher durch eine entsprechende Oberflächengestaltung der Laufbuchse weiter erhöht werden kann. Der zur Kühlung der Laufbuchse verwendete Freikolbenverdichterkühlfluidstrom kann im Anschluss beispielsweise über die Turbomaschinenleitung zu den zu kühlenden Turbomaschinenteilen geführt werden. Alternativ kann der Freikolbenverdichterkühlfluidstrom zu anderen zu kühlenden Freikolbenverdichterbauteilen und/ oder zum oben genannten zweiten Zwischenkühler geführt werden und erneut zum Kühlen von Freikolbenverdichterbauteilen eingesetzt werden.

Ferner besteht, eine vorteilhafte Ausgestaltung der Erfindung darin, dass die zu kühlenden Bauteile des Freikolbenverdichters, insbesondere dessen Laufbuchse, Zylinderkopf, Motorkolben, Ventile, etc. mit einem Teil des vom Verdichterkolben geförderten Fluids gekühlt werden und die abgeführte Wärme dem nachfolgenden Gasturbinenprozess zugeführt wird. Der Freikolbenverdichter weist eine Laufbuchse auf, die den Motorkolben umschließt und zum Führen des Motorkolbens dient. Die Laufbuchse kann von einer Hülse umschlossen werden, die in radialer Richtung zu einer Hülsenachse mehrere Bohrungen aufweist und konzentrisch zur Laufbuchse verlaufen kann. Ein Teil des in der Verdichterausgangsleitung befindliche Fluidstroms kann als Kühlfluid den zu kühlenden Bauteile des Freikolbenverdichters zugeführt werden. Insbesondere kann die Verdichterausgangsleitung derart ausgebildet sein, dass zumindest ein Teil des Freikolbenverdichterkühlfluidstroms über die radialen Bohrungen der Hülse strahlförmig gegen die Außenfläche der Laufbuchse prallt. Diese Prallkühlung sorgt für einen hohen Wärmeübergang, welcher durch eine entsprechende Oberflächengestaltung der Laufbuchse weiter erhöht werden kann. Der zur Kühlung der Laufbuchse verwendete Kühlfluidstrom kann im Anschluss beispielsweise durch Kanäle im Zylinderkopf und über eine Kühlleitung zu den zu kühlenden Turbomaschinenteilen geführt werden. Die Kanäle im Zylinderkopf können derart gestaltet sein, dass sie einen hohen Wärmeübergang ermöglichen und so ein überhitzen der im Zylinderkopf befindlichen Bauteile sicher verhindert werden kann.

In einer weiteren bevorzugten Ausführungsform der Erfindung kann der Freikolbenverdichter einen Sensor, insbesondere einen Weg- bzw. Abstandssensor, aufweisen, mittels dem die Verdichterkolbenposition und/ oder Motorkolbenposition ermittelt wird. Bei dem Sensor kann es sich insbesondere um optische, kapazitive, induktive, Ultraschall und/ oder Lasersensoren handeln. So wird auf einfache Weise sichergestellt, dass die Verdichterkolben- bzw. Motorkolbenposition für die Regelung des Freikolbenverdichters bekannt ist.

Das Verdichtungsverhältnis des Freikolbenverdichters kann abhängig von der benötigten Leistung des Freikolbenverdichters und/ oder der Turbomaschine variabel eingestellt werden. Des Weiteren kann eine Leistungsanpassung des Freikolbenverdichters, der beispielsweise zwei oder mehr Zylinder aufweist, durch ein Zu- oder Abschalten eines oder mehrerer Zylinder erfolgen. Dabei wird unter Abschalten eines Zylinders insbesondere verstanden, dass in den Zylinder kein Kraftstoff zugeführt wird. Dementsprechend wird unter Zuschalten eines Zylinders insbesondere eine Kraftstoffzufuhr in den Zylinder zum Zünden verstanden.

In einer vorteilhaften Ausgestaltung der Erfindung kann die Hybrid- Wärmekraftmaschine wenigstens ein Freikolbenverdichterpaar aufweisen. Die einzelnen Freikolbenverdichter des Freikolbenverdichterpaars sind vorzugsweise mechanisch miteinander gekoppelt und werden derart geregelt, dass die Verdichterkolben und damit auch die Motorkolben der beiden Freikolbenverdichter in Gegenphase schwingen. Dadurch können äußere dynamische Kräfte des Freikolbenverdichterpaars in einer Kolbenachsrichtung reduziert/ kompensiert werden.

Die Erfindung ist nicht darauf beschränkt, dass zwei Freikolbenverdichter ein Freikolbenverdichterpaar bilden. Vielmehr können auch mehr als zwei Freikolbenverdichter, insbesondere vier Freikolbenverdichter, eine Gruppe bilden. Bei Verwendung von beispielsweise mehreren Freikolbenverdichterpaaren werden die einzelnen Freikolbenverdichter der Freikolbenverdichterpaare vorzugsweise derart geregelt, dass die Freikolbenverdichterpaare in umgekehrter Gegenphase schwingen. Da sich ein Moment in Richtung zu einer Normalen zu der Ebene ausbildet, die durch die Kolbenachsen der beiden Freikolbenverdichter eines Freikolbenverdichterpaares ausgebildet wird, kann durch die. zuvor genannte Regelung der Freikolbenverdichterpaare erreicht werden, dass sich die Momente der beiden Freikolbenverdichterpaare in umgekehrte Richtungen ausbilden und damit gegenseitig wenigstens teilweise kompensieren.

Das Zünden eines Zylinders und/ oder das Öffnen bzw. Schließen (sowie des Hub) des Einlass- und Auslassventils des Freikolbenverdichters, die in der Zylinderraumwand, in der der Verdichtungsraumwand und/ oder im Zylinderkopf angeordnet sein können, kann in Abhängigkeit von diversen Parametern erfolgen. So kann das Zünden und/ oder Öffnen bzw. Schließen (sowie der Hub) des Einlass- und Auslassventils abhängig von einer ermittelten Verdichterkolbenposition und/oder Motorkolbenposition, insbesondere von einer Position zwischen einem maximalen unteren Totpunkt und einem maximalen oberen Totpunkt des Motorkolbens, einer Motorkolbengeschwindigkeit, einer Motorkolbenbeschleunigung, einem Zylinderraumdruck, einer Zylinderraumtemperatur, einer Druckdifferenz zwischen zwei Zylinderräumen und/ oder einer Freikolbenverdichterabgastemperatur und/oder eines Freikolbenverdichterabgasdrucks und/ oder eines Verdichtungsraumdruckes erfolgen. Durch die Verwendung zumindest eines der vorgenannten Parameter kann das Zünden und/ oder Öffnen bzw. Schließen sowie die Steuerung des Hubs des Einlass- und Auslassventils auf einfache Weise erfolgen. Die Betätigung der Ventile kann magnetisch, hydraulisch, evtl. mit pneumatischer Unterstützung erfolgen.

Das Verdichtungsverhältnis des Freikolbenverdichters kann abhängig von der benötigten Leistung des Freikolbenverdichters und/ oder der Turbomaschine variabel eingestellt werden. Insbesondere kann das Zünden auf Basis der Kolbenposition variabel erfolgen, d.h. der Zündzeitpunkt kann abhängig vom Lastzustand bei unterschiedlichen Kolbenhüben und/oder Regelparameter eingestellt werden. Damit kann ein fester Zusammenhang zwischen dem Verdichtungsverhältnis im Motorraum, dem Verdichtungsverhältnis im Verdichtungsraum und dem Fördervolumen vorgegeben werden. Des Weiteren kann eine Leistungsanpassung der Hybrid- Wärmekraftmaschine, die beispielsweise zwei oder mehr Freikolbenverdichter aufweist, durch ein Zu- oder Abschalten eines oder mehrerer Freikolbenverdichter erfolgen. Dabei wird unter Abschalten eines Freikolbenverdichters insbesondere verstanden, dass in den Zylinder kein Kraftstoff zugeführt wird. Dementsprechend wird unter Zuschalten eines Freikolbenverdichters insbesondere eine Kraftstoffzufuhr in den Zylinder zum Zünden verstanden. Die Regelung des Freikolbenverdichters kann auf Basis der Regelparameter derart erfolgen, dass der Lieferdruck des Verdichters im Betrieb immer höher als der Brennkammerdruck der Gasturbine ist. Hierdurch wird sichergestellt, dass mit dem vom Verdichter geförderten Fluidstrom der Zylinderraum des Freikolbenverdichters gespült und die Brennkammer und Turbine der Turbomaschine gekühlt werden kann.

Der Freikolbenverdichter kann in einem Zweitaktverfahren mit Kopfumkehrspülung arbeiten und somit ein asymmetrisches Steuerdiagramm für das in der Zylinderraumwand angeordnete Einlass- und Auslassventil ermöglichen. So kann nach einer Verbrennung bei einem Arbeitshub das Auslassventil vor erreichen des unteren Totpunktes bei einem Zylinderraumdruck der über dem Brennkammerdruck der Gasturbine liegt, geöffnet werden und der im Zylinderraum vorhandene Restdruck schiebt einen Teil der Freikolbenverdichterabgase in die Abgasleitung. Wenn der Zylinderraumdruck annähernd auf den Brennkammerdruck abgesenkt ist, öffnet das Einlassventil und die einströmende Frischluft, die den Lieferdruck des Verdichters aufweist, strömt in den Zylinderraum und schiebt die restlichen Freikolbenverdichterabgase in die Brennkammer der Gasturbine. Das Einlass- und Auslassventilventil werden erst geschlossen, wenn sich der Motorkolben bereits in Richtung zum oberen Totpunkt bewegt, insbesondere sich in einer Position befindet, die im Wesentlichen bei der Hälfte des Hubs liegt. Damit ergibt sich ein asymmetrisches Steuerdiagramm bei dem der Arbeitshub deutlich länger als der Kompressionshub ist.

Ein Vorteil des asymmetrischen Steuerdiagramms kann darin bestehen, dass sich durch eine derartige Steuerung des Einlass- und Auslassventils die im Freikolbenverdichter gewonnene Arbeit erhöht. Ein weiterer Vorteil kann darin bestehen, dass am Ende des Expansionshubs bzw. des Arbeitsubs der Zylinderraumdruck derart abgesenkt ist, dass er nur noch geringfügig über dem Brennraumdruck bzw. Brennkammerdruck der Turbomaschine liegt. Folglich wird der bei einem Öffnen des Auslassventils entstehende Drosselverlust reduziert. Bei einem Ladungswechselvorgang sind auch Methoden zur Emissionsreduzierung wie beispielsweise Abgasrückung etc. denkbar.

In einer vorteilhaften Ausgestaltung der Erfindung ist ein Motorkolben luftgelagert. Erfindungsgemäß kann wie nachstehend ausgeführt eine Luftlagerung bei unterschiedlichen Bereichen des Kolbens und zu unterschiedlichen Zeitpunkten erfolgen.

Im Vergleich zu einem konventionellen Kolbenmotor sind die Querkräfte die auf den Kolben des Freikolbenmotors wirken wesentlich kleiner. Grund hierfür ist, dass die Kolbenkraft nicht über ein Pleuel auf eine Kurbelwelle übertragenen wird. Daher kann in einer vorteilhaften Ausgestaltung der Erfindung eine Luftlagerung bzw. eine Heißgas- Pressschmierung für den Kolben vorgesehen werden mit dem großen Vorteil, dass auf ein Ölsystem in diesem Bereich verzichtet werden kann. Erfindungsgemäß kann wie nachstehend ausgeführt eine Luftlagerung, die an unterschiedlichen Bereichen des Kolbens und zu unterschiedlichen Zeitpunkten während eines Arbeitzyklus wirkt, vorgesehen werden.

Insbesondere kann der Motorkolben wenigstens eine Nut aufweisen, die in einem Motorkolbenhemd vorgesehen ist. Die Nut kann mit einer im Motorkolben befindlichen Leckagestromkammer verbunden sein. Die Leckagestromkammer kann mit einem Spalt verbunden sein, der sich zwischen der Laufbuchse und dem Motorkolben ausbildet. Falls der Motorkolben nicht zentrisch in der Laufbuchse läuft, können sich über den Umfang des Motorkolbens unterschiedliche Strömungsgeschwindigkeiten der Leckageströmung und damit unterschiedliche statische Drücke ausbilden, welche eine Querkraft auf den Motorkolben ausüben.

Daneben kann der Druck im Zylinderraum während eines Arbeitszyklus sehr stark variieren, ist aber zu jedem Zeitpunkt höher als der Druck im zugeordneten Verdichtungsraum, wodurch sich eine Leckageströmung vom Zylinderraum in Richtung des Verdichtungsraums ausbildet. Liegt der Kolben exzentrisch zur Bohrung der Laufbüchse, so treten bei der Leckageströmung durch den unsymmetrischen Spalt Querkräfte auf. Die Ursache für diese Querkräfte liegt in der unsymmetrischen Druckverteilung, die sich als Folge von über dem Spaltumfang verschiedenen Verlusten einstellt.

Die Geometrie der wenigstens einen Nut bewirkt ähnlich zu einer Labyrinthdichtung eine Druckabnahme der Leckageströmung über die wenigstens eine Nut. Infolge der Druckabnahme kann ein Druckausgleich in Umfangsrichtung des Motorkolbens erzielt werden, wodurch eine Querkraft auf den Motorkolben begrenzt werden kann. Nachdem sich der Druck der Leckageströmung bei einem Durchlaufen der wenigstens einen Nut abgebaut hat, wird zumindest ein Teil der Leckageströmung abgezweigt und über wenigstens eine Bohrung zur Leckagestromkammer geführt. Von dort gelangt der Leckagestrom über wenigstens eine radiale Leckagebohrung bezogen auf eine Motorkolbenachse in den Spalt zwischen Motorkolben und Laufbuchse. Die wenigstens eine Leckagebohrung kann sich an dem vom Zylinderraum entfernten Ende des Motorkolbens befinden. Vorzugsweise können auf dem Motorkolben taschenförmige Vertiefungen vorgesehen sein, die die Verteilung des aus der Leckagebohrung austretenden Leckagestroms günstig beeinflussen.

In einer bevorzugten Ausführung der Erfindung ist das Kolbenhemd des Motorkolbens in einem ersten axialen Abschnitt konisch, mit in Strömungsrichtung konvergierendem Querschnittsverlauf, ausgeführt. Besonders in Phasen mit hohem Druckunterschied zwischen Brennraum und Verdichtungsraum stellt sich durch die entstehende Leckageströmung eine zentrierende Kraft am Kolben ein wenn der Strömungsquerschnitt in Strömungsrichtung abnimmt. Dadurch kann die Leckageströmung zur selbsttätigen aerodynamischen Zentrierung des Kolbens eingesetzt werden.

In einem zweiten axialen Abschnitt des Kolbenhemdes sind umlaufende Labyrinthrillen vorgesehen. Die Labyrinthrillen sorgen für einen Druckausgleich in Umfangsrichtung wodurch die Querkräfte verringert werden und gleichzeitig sorgen sie für einen Druckabbau in Strömungsrichtung. Zwischen den Rillen ist eine Nut angeordnet, welche mit einer Leckagestromkammer im inneren des Kolbens verbunden ist. Nachdem der Druck beim Überströmen von wenigstens einer Labyrinthrille abgesenkt ist, wird zumindest ein Teil der Leckageströmung in die Leckagestromkammer geleitet. Der restliche Teil der Leckageströmung strömt über wenigstens eine weitere Labyrinthrille in Richtung des Verdichtungsraums.

Ein dritter axialer Abschnitt, der sich am vom Zylinderraum entfernten Ende des Motorkolbens befinden kann weist das Kolbenhemd eine Zylinderoberfläche auf. Der Druck in der Leckagestromkammer ist zu jedem Zeitpunkt eines Arbeitszyklus höher als der Druck im Spalt zwischen dem zylindrischen Teil des Kolbenhemds und der Laufbüchse. Hier tritt der abgezweigte Leckagestrom über wenigstens eine radiale Leckagebohrung bezogen auf eine Motorkolbenachse in den Spalt zwischen dem zylindrischen Teil des Motorkolbenhemds und der Laufbuchse aus. Vorzugsweise können auf dem zylindrischen Teil des Motorkolbenhemds taschenförmige Vertiefungen vorgesehen sein, die die Verteilung des aus der Leckagebohrung austretenden Leckagestroms günstig beeinflussen.

Der Motorkolben kann über einen Hauptkolben mit dem Verdichterkolben gekoppelt sein. Der Hauptkolben weist einen Hohlraum auf, innerhalb dessen ein Flugkolben vorgesehen ist, der relativ zu dem Hauptkolben bewegbar ist. Jeder der durch den Flugkolben getrennten Hohlraumbereiche kann jeweils mit beiden Seiten des durch den Verdichterkolben getrennten Verdichtungsraums verbunden sein. Des Weiteren kann der Hohlraum mit einem ersten Speichervolumen verbunden sein, das über wenigstens eine radiale Bohrung bezogen auf die Motorkolbenachse mit dem Spalt zwischen dem Motorkolben und der Laufbuchse verbunden ist. Innerhalb des Motorkolbens ist ein zweites Speichervolumen vorgesehen, dass durch ein Trennmittel, insbesondere ein Speichervolumenrückschlagventil vom ersten Speichervolumen getrennt ist. Das zweite Speichervolumen kann über wenigstens eine radiale Kolbenkronenbohrung bezogen auf die Motorkolbenachse mit dem Spalt zwischen dem Motorkolben und der Laufbuchse verbunden sein. Die wenigstens eine Kolbenkronenbohrung kann in der Nähe des zum Zylinderraum weisenden Motorkolbenbodens vorgesehen sein. Die wenigstens eine von dem ersten Speichervolumen zum Spalt führende radiale Bohrung ist vorzugsweise zwischen der wenigstens einen Leckagebohrung und der wenigstens einen Kolbenkronenbohrung vorgesehen.

In einer vorteilhaften Ausgestaltung der Erfindung kann ein Motorkolben luftgekühlt sein. Die Kühlluft wird dem Verdichtungsraum des Kolbenverdichters entnommen und über ein Kolbenkühlluft- Einlassventil zum Motorkolben geleitet. Von dort strömt die Kühlluft dann durch Kühlkanäle die im Kolbenhemd und Kolbenboden des Motorkolben vorgesehen sein können, zumindest zu einem Teil in eine Kühlluftkammer im inneren des Motorkolbens. Die Kanäle können derart gestaltet sein, dass sie einen hohen Wärmeübergang ermöglichen. Die Kühlluftkammer kann, in ähnlicher Weise wie die Leckagestromkammer mit einem Spalt verbunden sein, der sich zwischen der Laufbuchse und dem zylindrischen Teil des Motorkolbenhemds ausbildet. Dort trägt die aufgeheizte und unter Druck stehende Kühlluft, in dem dritten axialen Abschnitt des Motorkolbenhemds, ebenfalls zur Luftlagerung bei. Ein anderer Teil der Kolbenkühlluft , insbesondere der restliche Teil, kann über ein Kolbenkühlluft-Auslassventil, in Phasen mit niedrigem Zylinderraumdruck, in den Brennraum strömen.

Der Leckagestrom, vom Zylinderraum in Richtung des Verdichtungsraumes, stellt einen Verlust dar. Um diesen Verlust in Grenzen zu halten wird die Leckagestrommenge, durch enge Spalte zwischen dem Motorkolben und der Laufbuchse und damit guter Labyrinthwirkung, so gering wie möglich eingestellt, wodurch auch die Kühlluftmenge für den Motorkolben begrenzt ist. Um die Kühlwirkung zu verbessern kann in einer weiteren vorteilhaften Ausgestaltung der Erfindung der Verdichterkolben einen Hohlraum aufweisen, innerhalb dessen ein Flugkolben vorgesehen ist, der relativ zu dem Verdichterkolben bewegbar ist. Der Flugkolben ist in gleicher Weise wie der Motorkolben luftgelagert. Vom Verdichtungsraum gelangt Kühlluft über ein Kolbenkühlluft-Einlassventil in den Hohlraum. Bei der Zündung in einem Zylinderraum wird der Motorkolben und der mit diesem gekoppelte Verdichterkolben stark beschleunigt. Die Trägheit des Flugkolbens bewirkt, dass die im Hohlraum eingeschlossene Kühlluft auf der Seite des Flugkolbens auf der die Zündung erfolgt, weiter verdichtet wird. Die verdichtete Kühlluft strömt dann über ein Kolbenrückschlagventil durch Kanäle, die im Kolbenhemd und Kolbenboden vorgesehen sein können, zumindest zu einem Teil in eine Kühlluftkammer im inneren des Motorkolbens. Die Kanäle können derart gestaltet sein, dass sie einen hohen Wärmeübergang ermöglichen. Die Kühlluftkammer kann, in ähnlicher Weise wie die Leckagestromkammer mit einem Spalt verbunden sein, der sich zwischen der Laufbuchse und dem Motorkolben ausbildet. Dort dient die aufgeheizte und unter Druck stehende Kühlluft, in einem dritten axialen Abschnitt des Motorkolbenhemdes, ebenfalls zur Luftlagerung. Ein anderer Teil der Kolbenkühlluft, insbesondere der restliche Teil, kann über ein Kolbenkühlluft- Auslassventil, in Phasen mit niedrigem Zylinderraumdruck, in den Zylinderraum strömen.

Ein Vorteil des oben beschriebenen Aufbaus des Motorkolbens und Hauptkolbens besteht darin, dass an verschiedenen Bereichen des Motorkolbens zu verschiedenen Zeitpunkten eines Arbeitszyklus Luftpolster bzw. Gasfilme zwischen dem Kolben und der Laufbuchse vorhanden sind, die der Querkraft aus der ungleichmäßigen Druckverteilung und den quer zur Kolbenachse wirkenden Massekräften, insbesondere des Motorkolbens, entgegenwirken. Vorteilhafterweise wird durch die Luftlagerung auf einfache Weise sichergestellt, dass keine direkte Berührung des Kolbens mit der Laufbuchse erfolgt und damit Verschleißfreiheit erzielt werden kann..

In einer bevorzugten Ausführung können im Freikolbenverdichter Puffer, insbesondere mechanische Endpuffer, die im Zylinderraum und/ oder im Verdichtungsraum und/ oder an dem Motorkolben und / oder am Verdichterkolben und/ oder am Flugkolben angeordnet sein, mittels denen ein hartes Stoßen des Motorkolben gegen die Zylinderraumwand und / oder des Flugkolbens gegen den Motorkolben verhindert werden kann.

Der Antrieb von Nebenaggregaten des Freikolbenverdichters, wie beispielsweise einer Einspritzpumpe, kann durch die Turbine der Turbomaschine erfolgen. Wie oben bereits erwähnt, arbeitet der Freikolbenverdichter nach dem Diesel-Prozess. Zum Starten des Freikolbenverdichters kann der Diesel-Prozess mit einem Ottoverfahren kombiniert werden. So kann eine Zündung des Kraftstoff-Fluidgemisches im Zylinderraum mittels einer Zündkerze erfolgen.

Bei dem Freikolbenverdichter kann es sich um einen Freikolbenverdichter in Doppelkolbenweise handeln, bei dem der Verdichterkolben zentral zwischen den beiden Motorkolben angeordnet ist. Diese Bauweise ermöglicht die Realisierung einer kompakten Bauweise und besitzt einen geringen Regelaufwand. Alternativ kann es sich bei dem Freikolbenverdichter um einen Freikolbenverdichter in Einzelkolbenweise oder Gegenkolbenbauweise handeln.

Bei den Freikolbenverdichtern in Einzelkolbenbauweise kann in einem von dem Zylinderraum abgewandten Bereich ein Federelement, insbesondere eine Gasfeder, mit dem Hauptkolben bzw. Verdichterkolben gekoppelt sein. Das Federelement (bzw. Gasfederelement) kann innerhalb oder außerhalb des Hauptkolbens angeordnet sein. Durch das Federelement wird sichergestellt, dass der Hauptkolben und damit der Motorkolben nach einer Expansion (bzw. einem Arbeitshub) im Zylinderraum eine Verdichtung im Zylinderraum durchführen kann, indem in der Gasfeder die für die Verdichtung im Zylinderraum benötigte Energie zwischengespeichert wird. Dabei lässt sich bei einer Verwendung einer Gasfeder der Druck in der Gasfeder durch ein Massen- und/ oder Volumenregelmittel anpassen. Durch das Federelement kann der Oszillationsbereich des Kolbens und damit das Verdichtungsverhältnis im Verdichtungsraum und im Zylinderraum unabhängig voneinander eingestellt werden. Dieser Freiheitsgrad bietet insbesondere im Teillastbereich Vorteile.

Des Weiteren kann der Freikolbenverdichter in Einzelkolbenweise ein Verdichtungsraumrückschlagventil aufweisen, das mit der zum Zylinderraum zugewandten Rückseite des Verdichtungsraums gekoppelt ist. Das Verdichtungsraumrückschlagventil ermöglicht, dass während des Arbeitshubs des Motorkolbens auf der zum Zylinderraum zugewandten Seite des Verdichtungsraums ein Unterdruck entsteht. Die infolge des Unterdrucks auf den Verdichterkolben ausgeübte Kraft, der mit dem Motorkolben gekoppelt ist, trägt zur Beschleunigung des Motorkolbens bei der Verdichtung im Zylinderraum bei.

Wie vorstehend erläutert, ist es möglich, dass in der Wärmekraftmaschine nach dem ersten Aspekt der Erfindung anstelle des dort beschriebenen Freikolbenverdichters der Freikolbenverdichter nach dem zweiten Aspekt der Erfindung eingesetzt wird.

Eine vorteilhafte Verwendung der Wärmekraftmaschine (auch Hybrid-Wärmekraftmaschine genannt) nach dem ersten Aspekt bzw. dem Freikolbenverdichter nach dem zweiten Aspekt ist ein Flugtriebwerk. Insbesondere können die Wärmekraftmaschine und der Freikolbenverdichter mit allen gängigen Propulsoren von Flugtriebwerken, insbesondere Fan (Gebläse), Gegenläufiger-Fan, Propeller, CR-Propeller, kombiniert werden.

Daher ist nach einem dritten Aspekt der vorliegenden Erfindung, der mit dem ersten und/oder zweiten Aspekt kombiniert sein kann, ein Flugtriebwerk vorgesehen, das eine Gasturbine und drei unterschiedliche Düsen aufweist und in dem wenigstens ein Freikolbenverdichter mit einem ersten Zwischenkühler eingesetzt wird. Das Flugtriebwerk weist eine Hauptstromdüse und eine Nebenstromdüse auf. Durch die Hauptstromdüse kann ein Lufthauptstrom, der durch die Gasturbine (bzw. Kerntriebwerk) strömt, aus dem Flugtriebwerk austreten, wobei durch die Nebenstromdüse ein Luftnebenstrom, der an der Gasturbine vorbeigeführt wird, aus dem Flugtriebwerk austreten kann. Des Weiteren weist das Flugtriebwerk als Dritte Düse eine Zwischendüse auf, in der der im Zwischenkühler erwärmte Zwischenkühlerfluidstrom entspannt wird. Infolge des in dem ersten Zwischenkühler aufgeheizten Zwischenkühlerfluidstroms wird beim Entspannen des Zwischenkühlerfluidstroms in der Zwischendüse ein zusätzlicher Schub erzeugt.

Wie oben bereits erörtert, kann die Wärmekraftmaschine, insbesondere die Gasturbine, nach dem ersten Aspekt klein ausgebildet werden, da die Verdichtung des Fluidstroms zum Teil durch einen Freikolbenverdichter, insbesondere einem Freikolbenverdichter nach dem zweiten Aspekt der Erfindung, erfolgt. Eine Verwendung einer derartigen Wärmekraftmaschine in einem Flugtriebwerk bietet den Vorteil, dass bei einer Anbringung der Wärmekraftmaschine an einen Flügel des Flugzeugs der Schwerpunkt der Wärmekraftmaschine nahe bei dem Flügel liegt. Somit ist vorteilhafterweise ein durch die Wärmekraftmaschine auf den Flügel ausgeübtes Torsionsmoment gering und der Flügel kann leicht gebaut werden.

Der Zwischenkühler kann in Luftströmungsrichtung gesehen vor oder nach dem Freikolbenverdichter angeordnet sein. Ist der Zwischenkühler nach dem Freikolbenverdichter angeordnet, befindet sich der Schwerpunkt der Wärmekraftmaschine näher am Flügel, wodurch das durch die Wärmekraftmaschine ausgeübte Torsionsmoment auf den Flügel weiter verkleinert werden kann. Die Zwischendüse kann konzentrisch zu der Hauptstromdüse und/ oder Nebenstromdüse ausgeführt sein. Die Abzweigung für den Zwischenkühlerfluidstrom kann in Luftströmungsrichtung gesehen hinter einem Gebläse des Flugtriebwerks erfolgen. Infolge des in dem ersten Zwischenkühler aufgeheizten Zwischenkühlerfluidstroms wird beim Entspannen des Zwischenkühlerfluidstroms in der Zwischendüse ein zusätzlicher Schub erzeugt.

Wie oben bereits erörtert, kann die Hybrid- Wärmekraftmaschine, insbesondere die Gasturbine und der mindestens eine Freikolbenverdichter klein ausgebildet werden, da die Verdichtung des Fluidstroms zum Teil durch einen Freikolbenverdichter erfolgt. Eine Verwendung einer derartigen Hybrid Wärmekraftmaschine in einem Flugtriebwerk bietet den Vorteil, dass bei einer Anbringung des Triebwerks an einen Flügel eines Flugzeugs der Schwerpunkt des Triebwerks nahe bei dem Flügel liegt. Somit ist vorteilhafterweise ein durch das Triebwerk auf den Flügel ausgeübtes Torsionsmoment gering und der Flügel kann leicht gebaut werden.

Der Zwischenkühler kann in Luftströmungsrichtung gesehen vor- oder nach dem Freikolbenverdichter angeordnet sein. Vorteilhafterweise ist der Zwischenkühler nach dem Freikolbenverdichter angeordnet, dadurch befindet sich der Schwerpunkt der Wärmekraftmaschine näher am Flügel, wodurch das durch die Wärmekraftmaschine ausgeübte Torsionsmoment auf den Flügel weiter verkleinert werden kann.

In einer bevorzugten Ausführung wird das Gebläse über ein Getriebe von der Turbine angetrieben, wobei das Getriebe die Drehzahl der Turbine ins Langsame übersetzt. In einer weiteren bevorzugten Ausführung ist in Luftströmungsrichtung gesehen ein Vorsatzläufer vorgesehen, der vor dem Gebläse angeordnet und direkt mit der Turbine gekoppelt ist. Mittels des Vorsatzläufers soll ein Eintritt von Verunreinigungen, wie z.B. Sand, Schmutz etc., im Luftstrom, der in das Kerntriebwerk eintritt, verhindert bzw. reduziert werden. Alternativ und/ oder zusätzlich kann zwischen dem Turboverdichter und dem ersten Zwischenkühler ein Drallerzeuger zum Separieren von Verschmutzungen vorgesehen sein. Durch den Drallerzeuger kann die Luftströmung zwischen dem Verdichter und dem ersten Zwischenkühler in Rotation versetzt werden. Schwere Partikel der Luftströmung werden nach außen zentrifugiert und können, insbesondere vor dem Eintritt in den ersten Zwischenkühler, abgeführt werden.

Die Nebenaggregate des Flugtriebwerks und/ oder des Freikolbenverdichters können entlang der Umfangsrichtung der Gasturbine an dieser angeordnet sein. Der Antrieb der Nebenaggregate des Flugtriebwerks und/ oder des Freikolbenverdichters kann durch die Gasturbine erfolgen. Dabei können die Nebenaggregate, die keinen Antrieb von der Gasturbine benötigen, in einer den Luftnebenstrom definierenden Gondel angeordnet werden. Die Nebenaggregate können in Luftströmungsrichtung gesehen vor oder nach dem Freikolbenverdichter angeordnet sein.

Freikolbenverdichter können an und/oder in einer Gondel, an einem Flügel und/oder einem Rumpf eines Flugzeugs angeordnet sein. Alternativ oder zusätzlich können Freikolbenverdichter entlang der Umfangsrichtung der Gasturbine angeordnet sein. Vorteilhafterweise können Freikolbenverdichter rotationssymmetrisch um eine Gasturbinenachse angeordnet sein. Des Weiteren können mehrere Freikolbenverdichter eine Gruppe bilden, wobei mindestens zwei Gruppen, insbesondere je vier Freikolbenverdichter pro Gruppe, vorzugsweise in einem annähernd gleichen radialen Abstand zur Gasturbinenachse angeordnet sind.

Die Freikolbenverdichter können in Luftströmungsrichtung gesehen im Bereich der Nebenstromdüse, d.h. in einem Bereich zwischen der Gasturbine und der Gondel, positioniert sein, da hier das größte Einbauvolumen und die größte radiale Erstreckung für den Einbau zur Verfügung steht. Ein weiterer Vorteil liegt darin, dass die erforderlichen Verbindungsrohrleitungen zwischen der Gasturbine und dem Freikolbenverdichter kurz ausgeführt werden können und jeweils die gleiche Länge und die gleichen Umlenkungen aufweisen. Daraus ergibt sich eine sehr kompakte Bauweise mit geringem Gewicht, geringen aerodynamischen Verlusten und geringen Wärmeverlusten.

Die Regelung der einzelnen Freikolbenverdichter des Flugtriebwerks erfolgt wie Regelung der Freikolbenverdichter, die mit Bezug auf den ersten Aspekt erläutert werden. So können zwei Freikolbenverdichter ein Freikolbenverdichterpaar bilden, wobei die Motorkolben und Verdichterkolben der beiden Freikolbenverdichter in Gegenphase schwingen. Des Weiteren wurden die Freikolbenverdichter von zwei Freikolbenverdichterpaaren derart geregelt, dass die Freikolbenverdichter im umgekehrter Gegenphase schwingen, so dass die durch die Freikolbenverdichterpaare erzeugten Momente in umgekehrte Richtung weisen. Es können auch mehr als zwei Freikolbenverdichter, insbesondere vier Freikolbenverdichter, eine Gruppe bilden, wobei die Freikolbenverdichter einer Gruppe derart miteinander gekoppelt sein und geregelt werden können, dass kein Schwingen einer Gruppe in einer Kolbenachse erfolgt und die Momente von zwei Gruppen in umgekehrte Richtungen weisen.

Einzelne Freikolbenverdichter können mittels elastischen oder starren Elementen miteinander verbunden werden. Dabei kann jeder Freikolbenverdichter in einem Gehäuse untergebracht sein oder es können wenigstens zwei Freikolbenverdichter in einem Gehäuse untergebracht sein.

Freikolbenverdichter, die entlang der Umfangsrichtung der Gasturbine angeordnet sind, können an einem Pylon, mittels dem das Flugtriebwerk mit dem Flügel gekoppelt ist, und/ oder einer Tragstruktur befestigt werden. Die Tragstruktur kann mit dem Pylon gekoppelt sein. Des Weiteren kann auch der erste- und/oder der zweite Zwischenkühler, der erste- und/ oder zweite Abgaswärmetauscher und wenigstens ein Teil der Turbomaschine an der Tragstruktur befestigt werden. Durch die Anbringung der Freikolbenverdichter und eines Teils der Turbomaschine an der Tragstruktur werden die Massenkräfte davon direkt über die Tragstruktur und den Pylon in den Flügel geleitet. Durch elastische Elemente in den Verbindungsleitungen zwischen der Gasturbine und dem Freikolbenverdichter sowie den Wärmetauschern kann die mechanische Verformung der Gasturbine aufgrund äußerer Krafteinwirkung minimiert werden und das gesamte Flugtriebwerk kann incl. Der Tragstruktur vom Pylon getrennt werden.

Vor oder nach dem ersten Zwischenkühler bzw. vor der Brennkammer der Gasturbine kann jeweils eine Ausgleichskammer vorgesehen sein. Die Ausgleichskammer kann als eine Ringleitung, insbesondere als ein Halbring oder Viertelring, ausgebildet sein.

Weitere Merkmale und Vorteile ergeben sich aus den Unteransprüchen und dem Ausführungsbeispielen. Hierzu zeigen, teilweise schematisiert:
- Fig.1:: eine schematische Darstellung einer Hybrid- Wärmekraftmaschine mit einer Turbomaschine und einem Freikolbenverdichter gemäß einer Ausführung der Erfindung,
- Fig. 2:: einen Freikolbenverdichter in Doppelkolbenbauweise gemäß einer ersten Ausführung,
- Fig. 3:: einen Ausschnitt des Freikolbenverdichters in Doppelkolbenbauweise gemäß einer ersten Ausführung,
- Fig. 4:: einen Ausschnitt eines Zylinders des Freikolbenverdichters in Doppelkolbenbauweise gemäß einer ersten Ausführung,
- Fig. 5:: einen Freikolbenverdichter in Doppelkolbenbauweise gemäß einer zweiten Ausführung,
- Fig. 6:: einen Ausschnitt eines Zylinders des Freikolbenverdichters in Doppelkolbenbauweise gemäß einer zweiten Ausführung
- Fig. 7:: einen Freikolbenverdichter in Einzelkolbenbauweise gemäß einer dritten Ausführung der Erfindung,
- Fig. 8:: einen schematischen Längsschnitt durch ein Flugtriebwerk mit Gasturbine und Freikolbenverdichter gemäß einer Ausführung der Erfindung,
- Fig. 9:: einen schematischen Längsschnitt durch ein Flugtriebwerk mit Gasturbine und Freikolbenverdichter, analog zu Fig. 8 im Bereich der Befestigung am Flügel gemäß einer Ausführung der Erfindung.
- Fig. 10:: einen schematischen Querschnitt durch ein Flugtriebwerk mit Flügel und Freikolbenverdichter gemäß einer ersten Ausführung der Erfindung entlang eines Schnitts A-A aus Fig. 8,
- Fig. 11:: einen schematischen Querschnitt durch ein Flugtriebwerk mit Freikolbenverdichtern gemäß einer alternativen Ausführung der Erfindung entlang eines Schnitts A-A aus Fig. 8,

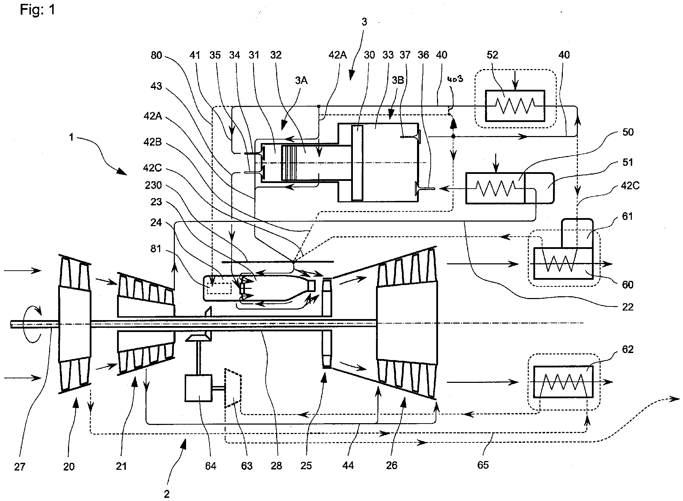

Die in Fig. 1 gezeigte Wärmekraftmaschine 1 weist eine Gasturbine 2 und einen Freikolbenverdichter 3 auf, die über eine oder mehrere Verbindungsleitungen miteinander verbunden sind. Die Gasturbine 2 weist einen Verdichter 20, der sich aus zwei Verdichterstufen zusammensetzt, eine Brennkammer 23 und eine Turbine 25, 26 auf, die sich aus zwei Turbinenstufen zusammensetzt. Die Brennkammer 23 ist mit einer Brennkammerausgleichskammer 24 verbunden. Des Weiteren weist die Gasturbine 2 zwei Gasturbinenwellen 27, 28 auf, die Gasturbinenwelle 27 verbindet die zweite Turbine 26 mit dem Turboverdichter 20 und zusätzlich wird überschüssige Leistung an einen Verbraucher nach außen abgeführt, die Gasturbinenwelle 28 verbindet die erste Turbine 25 mit dem Verdichter 21.

Der Freikolbenverdichter 3 setzt sich aus einer Wärmekraftmaschine 3A und einem Verdichter 3B zusammen. Die Wärmekraftmaschine 3A weist einen Zylinder mit Zylinderraum 31 und einen Motorkolben 32 auf. Der Verdichter 3B weist einen Verdichtungsraum 33 und einen Verdichterkolben 30 auf, wobei der Verdichterkolben 30 und der Motorkolben 32 miteinander verbunden sind. Der Verdichterkolben 30 ist zum Verdichten der in dem Verdichtungsraum 33 vorgesehen Luft vorgesehen. Der Motorkolben 32 befindet sich in dem Zylinderraum 31 und stellt die für die Verdichtung benötigte Leistung bereit.

Der Verdichtungsraum 33 ist über die Verdichterleitung 22 mit dem Endbereich des zweiten Turboverdichters 21 verbunden, wobei am Eintritt in den Verdichtungsraum 33 ein Verdichtereinlassventil 36 vorgesehen ist. Zwischen dem Verdichtungsraum 33 und dem Endbereich des zweiten Turboverdichter 21 ist ein erster Zwischenkühler 50 angeordnet. Zwischen dem ersten Zwischenkühler 50 und dem Endbereich des zweiten Turboverdichters 21 ist eine Ausgleichskammer 51 vorgesehen, um einen annähernd kontinuierlichen Fluidstrom für die mit dem Freikolbenverdichter 3 verbundenen Turboverdichter 20, 21 zu ermöglichen. Des Weiteren ist der zweite Turboverdichter 21 über eine Niederdruckkühlleitung 44 mit der zweiten Turbine 26 verbunden.

Die Wärmekraftmaschine 1 weist ebenfalls eine Zylinderleitung (auch als Verdichterausgangsleitung bezeichnet) 40 und eine Wärmetauscherleitung 41 auf. Die Zylinderleitung 40 weist mehrere Abzweigungen 42A, 42B, 42C auf. So verbindet die Zylinderleitung 40 über eine Zylinderabzweigung 42A den Verdichtungsraum 33 mit dem Zylinder des Freikolbenverdichters 3. Des Weiteren verbindet die Zylinderleitung 40 über eine Brennkammerabzweigung 80 den Verdichtungsraum 33 mit der Brennkammerausgleichskammer 81, um eine Gemischaufbereitung in der Brennkammer 23 zu ermöglichen. Zusätzlich verbindet die Zylinderleitung 40 über eine Turbomaschinenabzweigung 42B den Verdichtungsraum 33 mit einem Bereich der Brennkammer und/ oder der Turbine. Die Turbomaschinenabzweigung 403 kann derart ausgebildet werden, dass ein Teil der darin befindlichen Luft in die Brennkammer 23 zugeführt wird, ein anderer Teil die Brennkammer 23 und/ oder Turbine 26 umströmt und/ oder ein anderer Teil mit dem Brennkammerabgasen gemischt wird. In der Zylinderleitung 40 ist ein zweiter Zwischenkühler 52 vorgesehen, der in Luftströmungsrichtung gesehen vor den jeweiligen Abzweigungen 42A, 80, 42B angeordnet ist.

Die Hybrid- Wärmekraftmaschine 1 kann weist eine Verdichterausgangsleitung 40 aufweisen, welche in die Zylinderleitung 41, mehrere Kühlleitungen 42A, 42B, 42C sowie in eine Brennkammerabzweigung 80 verzweigt.

Die Zylinderabzweigung 42A der Zylinderleitung 40 ist derart ausgebildet, dass ein Teil der in der Zylinderabzweigung 42A befindlichen Luft zum Kühlen von Freikolbenverdichterbauteilen und ein anderer Teil als Spül- oder Betriebsmedium in dem Zylinderraum 31 eingesetzt wird. Sowohl die Freikolbenverdichterkühlluft als auch das bei der Verbrennung im Zylinderraum 31 entstandene Freikolbenverdichterabgas werden über eine Turbomaschinenleitung, die eine Abgasleitung 43 und eine Kühlleitung 42B aufweist, abgeführt. Vielmehr wird die Freikolbenverdichterkühlluft über die Kühlleitung 42B der Gasturbine 2 zugeführt. Die Kühlleitung 42A kann an ihrem von dem Freikolbenverdichter 3 entfernten Ende derart ausgebildet sein, dass die Freikolbenverdichterkühlluft direkt in die Brennkammerausgleichskammer 24 zugeführt wird, die Brennkammer 23 und/ oder Turbine 26 umströmt und/ oder mit dem Brennkammerabgas vermischt wird. Die Kühlleitung 42A ist ringförmig und konzentrisch zu der Abgasleitung 43 ausgebildet. Das Freikolbenverdichterabgas wird über die Abgasleitung 43 der Brennkammerausgleichskammer 24 zugeführt. So verbindet die Wärmetauscherleitung 41 und die Zylinderleitung 40 über das Einlassventil 34 und das Verdichterauslassventil 37 den Verdichtungsraum 33 mit dem Zylinderraum 31 um den Zylinderraum 31 mit Spül- bzw. Betriebsmedium zu versorgen, wobei die Leitungsvolumen als Zwischenspeicher bzw. als Ausgleichskammern für das geförderte Fluid dienen. Bei Verwendung mehrerer Freikolbenverdichter können die Verdichterausgangsleitungen vorteilhafterweise miteinander gekoppelt sein. In der Verdichterausgangsleitung 40 ist (optional) ein zweiter Zwischenkühler 52 vorgesehen.

Die Kühlleitungen 42A, 42B, 42C verbinden den Verdichtungsraum 33 über das Verdichterauslassventil 37 und die Verdichterausgangsleitung 40 mit der Gasturbine 2 im Bereich der Brennkammer 23 und/ oder der Turbine 25, wobei die Kühlleitungen 42A, 42B, 42C vor dem Eintritt in die Gasturbine 2 zu einer gemeinsamen Kühlleitung zusammengeführt werden können. Die Kühlleitung 42A in Luftströmungsrichtung gesehen vor oder nach dem zweiten (optionalen) Zwischenkühler 52 von der Verdichterausgangsleitung 40 abgezweigt wird und dann an den zu kühlenden Teilen des Freikolbenverdichters 3, insbesondere dessen Zylinder, Zylinderkopf, Ventile etc. vorbeigeleitet wird um diese Teile zu kühlen. Die Kühlleitung 42B verbindet die Verdichterausgangsleitung 40 auf direktem Weg mit der Gasturbine 2. Die Kühlleitung 42C verbindet ebenfalls die Verdichterausgangsleitung 40 mit der Gasturbine 2, wobei ein erster Abgaswärmetauscher 60 durchströmt wird. Der erste Abgaswärmetauscher 60 ist stromabwärts der Turbine 26 angeordnet und dient zum Wärmetausch zwischen dem Turbinenabgas und der in der Kühlleitung 42C vorgesehenen Kühlluft. In Strömungsrichtung gesehen vor dem ersten Abgaswärmetauscher 60 ist eine Ausgleichskammer 61 vorgesehen.

Die Kühlleitungen 42A, 42B, 42C sind im Bereich der Brennkammer 23 und/ oder der Turbine 25 am Gehäuse 230 der Gasturbine 2 angeschlossen, können aber auch vor erreichen des Gehäuses 230 zu einer gemeinsamen Kühlleitung zusammengeführt werden. Die aus dem Verdichtungsraum 33 geförderte Luft gelangt über die Kühlleitungen 42A, 42B, 42C (42) in das Gehäuse 230 der Gasturbine 2 wo die Luft, ähnlich wie bei einer aus dem Stand der Technik bekannten Gasturbine, zur Kühlung der Brennkammer 23 und der Turbine 25 verwendet wird. Optional kann auch ein Teil der Kühlluft zur Gemischaufbereitung für die Verbrennung in der Brennkammer 23 abgezweigt werden.

Des Weiteren verbindet die Zylinderleitung 41 über eine Brennkammerabzweigung 80 den Verdichtungsraum 33 mit einer Gemischaufbereitungseinheit 81 in der ein mager vorgemischtes und vorverdampftes Gemisch für eine Pilotflamme aufbereitet wird. Die Pilotflamme dient zum permanenten Zünder des nach einem Magerkonzept aufbereiteten Gemisches in der Brennkammer 23.

Das bei der Verbrennung im Zylinderraum 31 entstandene Freikolbenverdichterabgas wird über das Auslassventil 35 in die Abgasleitung 43 geleitet. Die Abgasleitung 43 kann an ihrem von dem Freikolbenverdichter 3 entfernten Ende derart ausgebildet sein, dass das Freikolbenverdichterabgas direkt in die Brennkammerausgleichskammer 24 zugeführt wird und von dort in die Brennkammer 23 strömt.

Die Kühlleitung 42C verbindet den Verdichtungsraum 33 mit einem ersten Abgaswärmetauscher 60. Der erste Abgaswärmetauscher 60 ist an dem von dem Verdichter 20 entfernten Ende der Turbine 26 angeordnet und dient zum Wärmetausch zwischen dem Turbinenabgas und der in der Kühlleitung 42C befindlichen Luft. Die durch den ersten Abgaswärmetauscher 60 aufgeheizte Luft wird zur Brennkammer 23 und/ oder Turbine 26 geführt, um diese jeweils zu Kühlen. Dabei kann die im ersten Abgaswärmetauscher 60 aufgezeigte Luft direkt in die Brennkammer 23 zugeführt werden, die Brennkammer 23 und/ oder Turbine 26 umströmen und/ oder dem Brennkammerabgas zugemischt werden.

Des Weiteren weist die Hybrid- Wärmekraftmaschine 1 einen zweiten Abgaswärmetauscher 62 auf, der stromabwärts der zweiten Turbine 26 angeordnet ist. Der zweite Abgaswärmetauscher 62 ist mit einem Endbereich des ersten Turboverdichter 20 und einer Zusatzturbine 63 verbunden. Im zweiten Wärmetauscher 62 erfolgt ein Wärmetausch zwischen dem Turbinenabgas und dem von dem Endbereich des ersten Turboverdichters 20 abgezweigten Luftstrom. Der erhitzte Luftstrom wird in der Zusatzturbine 63 entspannt, wobei die in der Zusatzturbine 63 gewonnene Arbeit über ein Getriebe 64 an die Gasturbinenwelle 28 übertragen oder an Nebenaggregate die am Getriebe 64 angeordnet sind übertragen wird.

Im Folgenden wird der Betriebsablauf der Hybrid- Wärmekraftmaschine 1 erläutert. Durch den Turboverdichter 20 wird Luft angesaugt und vorverdichtet. Ein Teil der verdichten Luft wird zum zweiten Abgaswärmetauscher 62 geführt und dort erhitzt. Die erhitzte Luft strömt durch die Zusatzturbine 63 und entspannt. Die in der Zusatzturbine 63 bei der Entspannung der erhitzten Luft gewonnen Arbeit wird über das Getriebe 64 an die Gasturbinenwelle 28 übertragen.

Der restliche Luftstrom des ersten Turboverdichters 20 wird im zweiten Turboverdichter 21 weiter verdichtet. Dabei wird ein Teil der im zweiten Turboverdichter 21 verdichteten Luft über die Niederdruckkühlleitung 44 abgezweigt und zum Kühlen der zweiten Turbine 26 verwendet. Der restliche Luftteil wird über die Verdichterleitung 22 und das Verdichtereinlassventil 36 in den Verdichtungsraum 33 des Freikolbenverdichters 3 zugeführt, wobei der Luftstrom vor dem Eintritt in den Verdichtungsraum 33 in dem ersten Zwischenkühler 50 gekühlt wird. Vor dem ersten Zwischenkühler 50 ist eine Ausgleichskammer 51 vorgesehen, die einen annähernd kontinuierlichen Fluidstrom für die Turboverdichter 20, 21 sicherstellt.

Der dem Verdichtungsraum 33 zugeführte Luftstrom wird mittels des Verdichterkolbens 30 verdichtet und über das Verdichterauslassventil 37 aus dem Verdichtungsraum 33 in die Verdichterausgangsleitung 40 abgeführt. Ein Teil dieser Luft wird über die Zylinderleitung 41 und das Einlassventil 34 dem Zylinderraum 31 zugeführt und dient dort zum Ausspülen des im Zylinderraum 31 befindlichen Freikolbenverdichterabgases und als Betriebsmedium für den im Zylinderraum 31 ablaufenden Dieselprozess, wobei in der Verdichterausgangsleitung 40 ein zweiter Zwischenkühler 52 (optional) vorgesehen sein kann. Das durch die Verbrennung eines Kraftstoff- Luftgemisches im Zylinderraum 31 entstehende Freikolbenverdichterabgas wird über das Auslassventil 35 und die Abgasleitung 43 vom Zylinderraum 31 in die Brennkammerausgleichskammer 24 geleitet. Das Freikolbenverdichterabgas strömt unter Zumischung von Kraftstoff aus der Ausgleichskammer 24 in die Brennkammer 23 und wird dort zur Zündung gebracht.

Dabei dient ein Teil des in der Zylinderabzweigung 42A befindlichen Luftstroms zum Kühlen von Freikolbenverdichterbauteilen und wird anschließend über die Kühlleitung 42B den zu kühlenden Gasturbinenteilen zugeführt. Der restliche Teil des in der Zylinderabzweigung 42A befindlichen Luftstroms wird dem Zylinderraum 31 als Spül- oder Betriebsmedium zugeführt. Die in den Zylinderraum 31 als Betriebsmedium zugeführte Luft vermischt sich mit dem im Zylinderraum befindlichen Kraftstoff. Im Anschluss wird das Gemisch verdichtet und gezündet. Durch die Verbrennung steigt der Druck im Zylinderraum bis ungefähr 230bar an. Das Freikolbenverdichterabgas wird über die Abgasleitung 42A in die Brennkammerausgleichskammer 81 geführt.

Der zweite Luftstrom wird dem ersten Abgaswärmetauscher 60 zugeführt und dort erwärmt. Im Anschluss an den ersten Abgaswärmetauscher 60 wird der zweite Luftstrom der Brennkammer 23 und/ oder der Turbine 26 zugeführt.

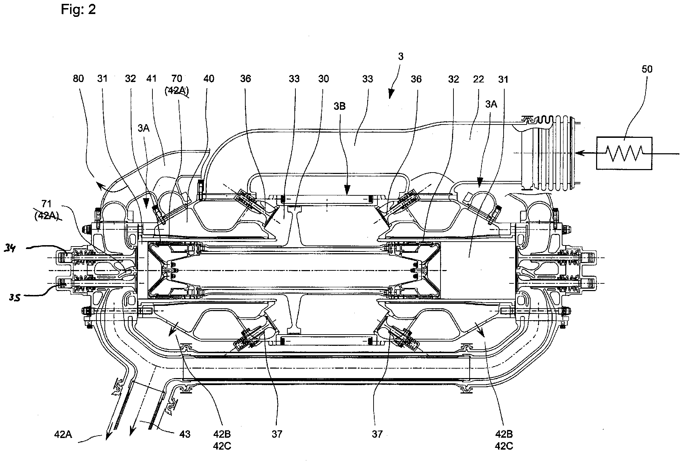

In Fig. 2 wird ein Freikolbenverdichter 3 in Doppelkolbenbauweise gemäß einer ersten Ausführung dargestellt. Der Freikolbenverdichter 3 weist zwei Zylinderräume 31 mit jeweils einem Motorkolben 32 und einem Verdichterkolben 30 auf, der sich in dem Verdichtungsraum 33 befindet, wobei der Verdichterkolben 30 zentral zwischen den beiden Motorkolben 32 angeordnet ist.

In einer Verdichtungsraumwand des Freikolbenverdichters 3 sind Verdichtereinlass- 36 und Auslassventile 37 vorgesehen. Über die Verdichtereinlassventile 36 kann die in dem ersten Zwischenkühler 50 abgekühlte Luft in die durch den Verdichterkolben 30 getrennten Verdichtungsräume 33 zugeführt werden. Durch ein selbsttätiges Öffnen der Verdichterauslassventile 37 kann die durch den Verdichterkolben 30 verdichtete Luft aus den Verdichtungsraum 33 abgeführt werden. Die abgeführte Luft kann wie in Fig. 1 dargestellt über die Verdichterausgangsleitung 40 und der Zylinderleitung 41 dem Zylinderraum 31 und über die Kühlleitungen 42A, 42B, 42C der Gasturbine, insbesondere der Brennkammer 23 und/ oder der ersten Turbine 25 sowie über die Brennkammerabzweigung 80 einer Gemischaufbereitungsvorrichtung 81 zugeführt werden.

In einer Zylinderwand des Zylinders sind Ein- und Auslassventile 34, 35 vorgesehen. Durch ein Öffnen der Einlassventile 34 kann über eine Wärmetauscherleitung 40 ein Teil der in der Zylinderleitung 40 befindlichen Luft in den Zylinderraum 31 einströmen. Durch ein Öffnen des Auslassventils 35 kann das bei der Verbrennung im Zylinderraum 31 entstandene Abgas über eine Abgasleitung 43 aus dem Zylinderraum 31 abgeführt werden. Die Leitungen der beiden an gegenüberliegenden Enden des Freikolbenverdichters vorgesehenen Zylinderräume 31, über die das Abgas aus dem jeweiligen Zylinderraum 31 abgeführt wird, sind mit der Abgasleitung 43 verbunden.

Die Kühlleitung 42 ist ringförmig und konzentrisch zu der Abgasleitung 43 ausgebildet.

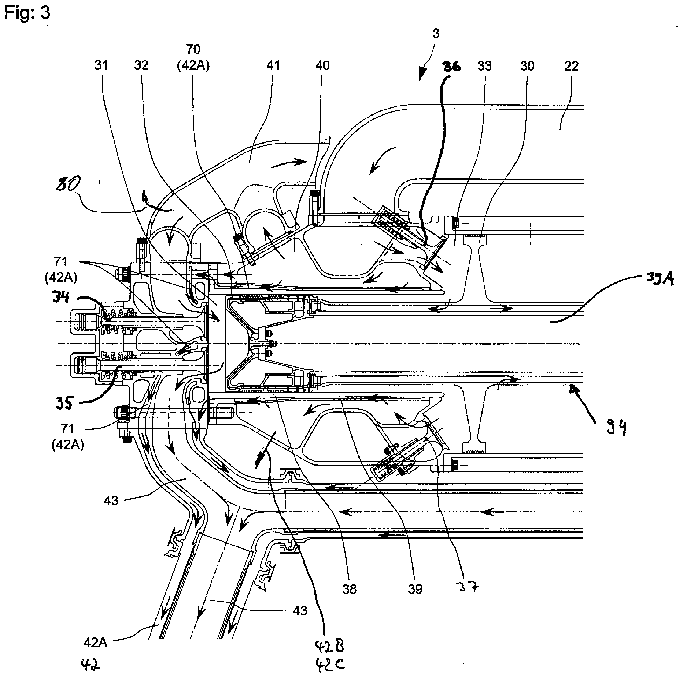

Aus Fig. 3 ist erkennbar, dass das vom Zwischenkühler 50 kommende Fluid (Luft) durch die Verdichterleitung 22 und das Verdichtereinlassventil 36 in den Verdichtungsraum 33 gleitet wird. Das vom Verdichterkolben 30 geförderte Fluid gelangt in die Zylinderleitung 40 welche sich im gezeigten Beispiel rotationsymmetrisch um die Hülse 39A ausbildet. Ein Teil des Fluids wird über die Wärmetauscherleitung 41 und das Einlassventil 34 dem Zylinderraum 31 zugeführt.

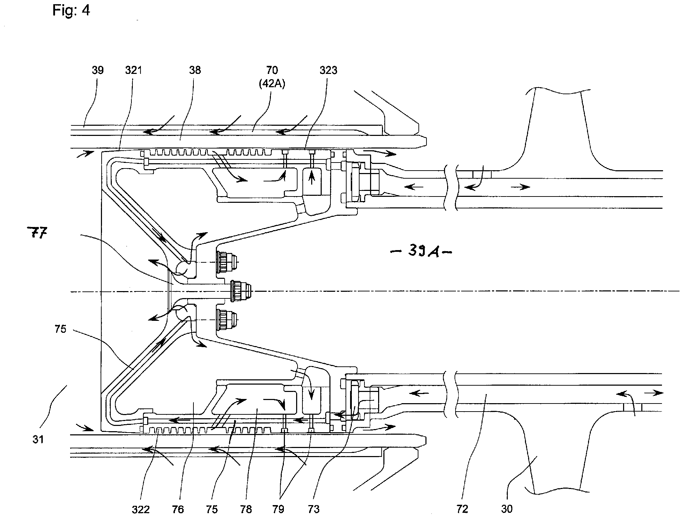

Wie aus Fig. 3 erkennbar ist, weist der Motorkolben 32 eine Mulde auf und wird in einer Laufbuchse 38 geführt. Die Laufbuchse 38 umschließt den Motorkolben 32. Die Laufbuchse 38 wird wiederum von einer Hülse 39 umschlossen. Die Hülse 39 verläuft konzentrisch zu der Laufbuchse 38 und weist zur Laufbuchse 38 gerichtete Öffnungen auf. Zwischen der Laufbuchse 38 und der Hülse 39 bildet sich ein Spalt aus. Der Spalt 323 (siehe Fig. 4) ist an einem seiner Enden mit Kanälen verbunden, die mit der Kühlleitung 42 gekoppelt sind. Der Spalt 323 zwischen der Laufbuchse 38 und der Hülse 39 sowie die Kanäle im Zylinderkopf repräsentieren die Kühlleitung 42A. Der Motorkolben 32 wird wie nachstehend detaillierter ausgeführt in der Laufbuchse 38 luftgelagert.

Der Motorkolben 32 weist, wie in Fig. 4 am besten ersichtlich ist, mehrere über das Kolbenhemd verteilte Nuten 322 auf. Die Nuten 322 sind über eine Bohrung mit einer im Motorkolben 32 vorgesehenen Leckagestromkammer 79 verbunden. Die Leckagestromkammer 79 weist mehrere in radialer Richtung zu einer Motorkolbenachse verlaufende Leckagebohrungen auf. Die Leckagebohrungen verbinden die Leckagestromkammer 79 mit einem zwischen dem Motorkolben 32 und der Laufbuchse 38 ausgebildeten Spalt. Die Leckagebohrungen sind an dem von dem Zylinderraum 31 entfernten Ende des Motorkolbens 32 vorgesehen.

Des Weiteren weist der Motorkolben 32 ein erstes und ein zweites Speichervolumen bzw. Kühlkammer 76 auf. Das erste Speichervolumen 76 ist mit dem Hohlraum 39A des Hauptkolbens 94 verbunden, wobei zwischen dem ersten Speichervolumen 76 und dem Hohlraum 39A ein Hohlraumrückschlagventil bzw. Kolbenkühlluft-Austrittsventil 77 vorgesehen ist. Das Hohlraumrückschlagventil 77 verhindert, dass Luft aus dem ersten Speichervolumen 76 in den Hohlraums 39A strömen kann. Das erste Speichervolumen 76 ist mit radialen Bohrungen bezogen auf den Motorkolbenachse verbunden, die zum Spalt zwischen dem Motorkolben 32 und der Laufbuchse 36 weisen.

Ferner ist das zweite Speichervolumen 326 mit einer radialen Kolbenkronenbohrung 75 bezogen auf die Motorkolbenachse verbunden, wobei die Kolbenkronenbohrung das zweite Speichervolumen mit dem Spalt 323 zwischen dem Motorkolben 32 und der Laufbuchse 38 verbindet. Die Kolbenkronenbohrung 75 ist Nahe dem Motorkolbenboden angeordnet, der dem Zylinderraum 31 zugewandt ist. Die radialen Bohrungen, die das erste Speichervolumen 76 mit dem Spalt zwischen dem Motorkolben 32 und der Laufbuchse 36 verbinden, befinden sich zwischen der Kolbenkronenbohrung und der Leckagebohrung.

Im Folgenden wird der Betriebsablauf des in den Fig. 2 bis 4 gezeigten Freikolbenverdichters erläutert. Die vom ersten Zwischenkühler 50 kommende Luft gelangt über das Einlassventil 36 in den Verdichtungsraum 33. Im Verdichtungsraum 33 wird die Luft durch den Verdichterkolben 30 verdichtet. Die verdichtete Luft verlässt über das Auslassventil 37 den Verdichtungsraum 33 und strömt in die Zylinderleitung 40. Ein Teil der in der Zylinderabzweigung 42A der Zylinderleitung 40 befindlichen Luft strömt über das Einlassventil 34 in den Zylinderraum 31. Dabei strömt die im Verdichtungsraum 33 verdichtete Luft in den Zylinderraum 31, der bezogen auf die Seite des Verdichtungsraum 33, in der die Verdichtung der Luft erfolgt ist, weiter entfernt ist. Nach einer Verbrennung im Zylinderraum 31 öffnet das Auslassventil 35 und das Abgas kann über eine Leitung in Richtung der in den Fig. 2-4 dargestellten Pfeile aus dem Zylinderraum 31 ausströmen, wobei die Leitung mit der Abgasleitung 43 verbunden ist.

Ein anderer Teil der in der Zylinderabzweigung 42A befindlichen Luft dient zum Kühlen von Freikolbenverdichterbauteilen und strömt beispielsweise wie durch den Pfeil in Fig. 3 dargestellt ist zum Teil über die Löcher in der Hülse 39 in den Spalt zwischen der Hülse 39 und der Laufbuchse 38 bzw. prallt nach einem Einströmen in den Spalt gegen die Laufbuchse 38. Die Freikolbenverdichterkühlluft strömt über an einem Ende des Spalts vorgesehene Kanäle in die Kühlleitung 42. Des Weiteren wird ein anderer Teil der Freikolbenverdichterkühlluft zum Kühlen der Einlass- und Auslassventile 34, 35 und weiterer Bauteile im Zylinder eingesetzt.

Während des Betriebs des Freikolbenverdichters 3 variiert der Zylinderraumdruck sehr stark, wobei er zu jeder Zeit größer ist als der Druck in dem Verdichtungsraum 33 bzw. im Hohlraum 39A des Hauptkolbens 94. Somit bildet sich eine Leckageströmung vom Zylinderraum 31 in Richtung zum Hohlraum 39A aus. Bei dem Durchströmen der Nut 322 erfolgt eine Druckabnahme der Leckageströmung, wodurch die von der Leckageströmung auf den Motorkolben 32 ausgeübte Querkraft verringert wird. Die Leckageströmung strömt über die Bohrung in die Leckagestromkammer 79 und von dort über die Leckagebohrungen in den Spalt zwischen dem Motorkolben 32 und der Laufbuchse 38, so dass sich dazwischen ein Luftpolster ausbildet.

Bei einem Zünden im Zylinderraum 31 wird der Motorkolben 32 und der damit verbundene Hauptkolben 94 in Richtung zu dem nicht gezündeten Zylinderraum 31 bewegt. Die Massenträgheit des Flugkolbens 90 bewirkt, dass die Luft, die sich auf der Seite des Hohlraums 39A befindet, die näher zum gezündeten Zylinderraum 31 ist, verdichtet wird. Die in dem Hohlraum 39A verdichtete Luft gelangt über das Hohlraumrückschlagventil 77 in das erste Speichervolumen 76. Von dort gelangt die verdichtete Luft über Bohrungen in den Spalt zwischen dem Motorkolben 32 und der Laufbuchse 38, so dass sich in diesem Bereich ein Luftpolster ausbildet.

Bei einem Zünden des Zylinderraums 31 füllt sich das zweite Speichervolumen mit der zuvor genannten Leckageströmung. Das Speichervolumenrückschlagventil 77 verhindert, dass die in dem zweiten Speichervolumen befindliche Leckageströmung in das erste Speichervolumen 76 strömen kann. Während der Expansion sinkt der Zylinderraumdruck und das zweite Speichervolumen entlädt sich. Hierzu strömt über die Kolbenkronenbohrung der in dem zweiten Speichervolumen befindliche Leckagestrom in den Spalt zwischen Motorkolben 32 und Laufbuchse 38, so dass sich dazwischen ein Luftpolster ausbildet. Falls der Druck im zweiten Speichervolumen unter den Druck im ersten Speichervolumen 76 fällt, strömt von dort Kühlluft in das zweite Speichervolumen und über die Kolbenkronenbohrung ebenfalls in den Spalt zwischen Motorkolben 32 und Laufbuchse 38. Dabei wird der zum Zylinderraum 31 zugewandte Motorkolbenboden gekühlt.

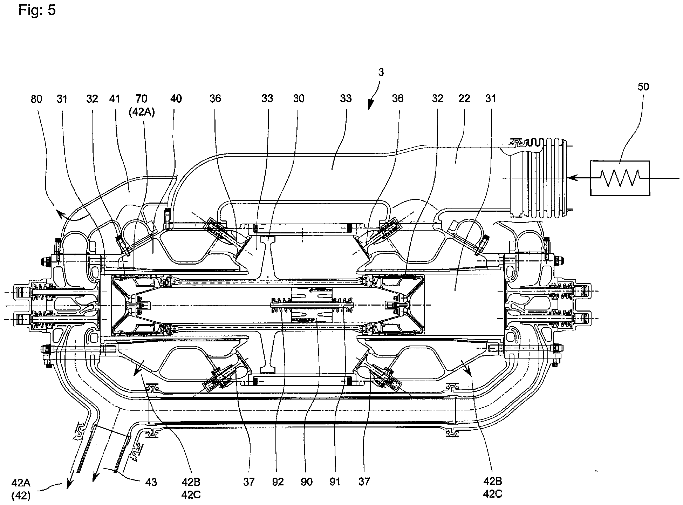

Fig. 5 zeigt einen Freikolbenverdichter analog zu Fig. 3 jedoch mit einem Flugkolben 90 .

Ferner ist aus Fig. 5 ersichtlich, dass der Hauptkolben 94 einen Hohlraum 39A aufweist, innerhalb dessen sich ein Flugkolben 90 befindet. Der Flugkolben 90 ist relativ zum Hauptkolben 94 bewegbar. Der Flugkolben 90 weist eine Achse 91 auf, die sich in Hauptkolbenachsrichtung durch den Flugkolben 90 erstreckt und an beiden Enden des Flugkolbens 90 aus diesem ragt. An diesen aus dem Flugkolben 90 ragenden Enden ist jeweils ein Flugkolbenfederelement 92 angeordnet. Mittels des Flugkolbenfederelements 92 kann ein Stoß zwischen dem Flugkolben 90 und dem Motorkolben 32 gedämpft werden. Der Flugkolben 90 wird auf analoge Weise wie der Motorkolben 32 luftgelagert.

Jede Seite des durch den Flugkolben 90 getrennten Hohlraums 39A ist mit jeder Seite des durch den Verdichterkolben 30 getrennten Verdichtungsraums 33 verbunden. Dabei sind Verdichtungsraumrückschlagventile 74 in dem Hauptkolben vorgesehen, die Verhindern, dass Luft aus dem Hohlraum 39A in den Verdichtungsraum 33 strömt.

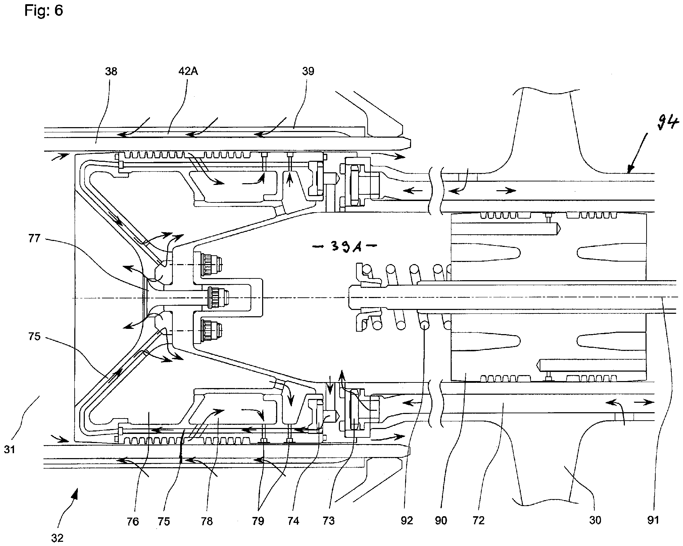

Fig. 6 zeigt ein Motorkolben analog zu Fig. 4 .

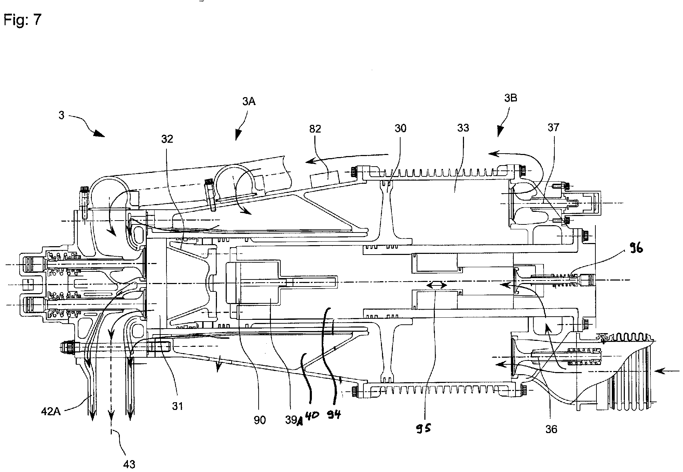

Fig. 7 zeigt einen Freikolbenverdichter 3 in Einzelkolbenbauweise nach einer zweiten Ausführung der Erfindung. Der Freikolbenverdichter 3 weist im Gegensatz zu dem in den Fig. 2 bis 4 gezeigten Freikolbenverdichter in Doppelkolbenweise nur einen Zylinder und dementsprechend nur einen Motorkolben 32 auf. Der in Fig. 7 gezeigte Zylinder ist gleich aufgebaut wie der Zylinder bei dem Freikolbenverdichter in Doppelkolbenbauweise. Des Weiteren erfolgt die Kühlung des Zylinders bzw. der Freikolbenverdichterbauteile in beiden Freikolbenverdichtern in gleicher Weise. Der Freikolbenverdichter in Einzelbauweise weist ebenfalls wie der Freikolbenverdichter in Doppelkolbenbauweise einen Verdichtungsraum 33 mit Verdichterkolben 30 und einen Hauptkolben 94 mit einem Hohlraum 39A auf, der mit dem Verdichtungsraum 33 verbunden ist und in dem ein Flugkolben 90 angeordnet ist.

Der in Fig. 7 gezeigte Freikolbenverdichter 3 unterscheidet sich von dem Freikolbenverdichter in Doppelkolbenbauweise darin, dass an dem von dem Zylinderraum 31 entfernten Ende des Hauptkolbens 94 eine Gasfeder 96 angeordnet ist, die mit dem Hauptkolben 94 gekoppelt ist.

Die Gasfeder 96 bewirkt, dass nach einer Expansion des Motorkolbens 32 dieser wieder in Richtung zu dem oberen Totpunkt bewegt werden kann. Der Druck in der Gasfeder 96 lässt sich durch ein Massen- bzw. Volumenregelungsmittel 95 regeln. Das Massen- bzw. Volumenregelungsmittel 95 ist mit dem Hauptkolben 94 gekoppelt.

Des Weiteren ist an der zum Zylinderraum 31 weisenden Seite der Verdichtungsraumwand ein Verdichtungsraumrückschlagventil 82 angeordnet. Das Verdichtungsraumrückschlagventil 82 bewirkt, dass während des Arbeitshubes des Motorkolbens 32 ein Unterdruck in der Seite des durch den Verdichterkolben 30 getrennten Verdichtungsraums 33 erzeugt wird, die näher zum Zylinderraum 31 ist.

Ferner ist aus Fig. 7 ersichtlich, dass der Hauptkolben 94 einen Hohlraum 39A aufweist, innerhalb dessen sich ein Flugkolben 90 befindet. Der Flugkolben 90 ist relativ zum Hauptkolben 94 bewegbar. Der Flugkolben 90 weist eine Achse 91 auf, die sich in Hauptkolbenachsrichtung durch den Flugkolben 90 erstreckt und an beiden Enden des Flugkolbens 90 aus diesem ragt. An diesen aus dem Flugkolben 90 ragenden Enden ist jeweils ein Flugkolbenfederelement 92 angeordnet. Mittels des Flugkolbenfederelements 92 kann ein Stoß zwischen dem Flugkolben 90 und dem Motorkolben 32 gedämpft werden. Der Flugkolben 90 wird auf analoge Weise wie der Motorkolben 32 luftgelagert.

Jede Seite des durch den Flugkolben 90 getrennten Hohlraums 39A ist mit jeder Seite des durch den Verdichterkolben 30 getrennten Verdichtungsraums 33 verbunden. Dabei sind Verdichtungsraumrückschlagventile 74 in dem Hauptkolben vorgesehen, die Verhindern, dass Luft aus dem Hohlraum 39A in den Verdichtungsraum 33 strömt.

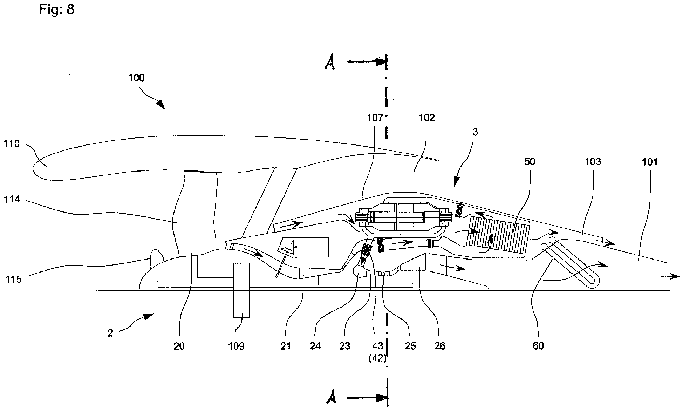

Fig. 8 zeigt eine Seitenansicht auf ein Flugtriebwerk mit Gasturbine und Freikolbenverdichter 3. Das Flugtriebwerk 100 weist die Gasturbine 2 und Freikolbenverdichter 3 auf. Zwischen einer Gondel 110 und einer Gasturbinenverkleidung 107 bildet sich ein Einlassbereich aus, über den Luft angesaugt werden kann. Zur Ansaugung der Luft ist ein Gebläse 114 zwischen der Gondel 110 und der Gasturbine 2 vorgesehen, wobei das Gebläse 114 mit der Turbine 26 gekoppelt ist und durch diese angetrieben wird. Dabei ist zwischen der Turbine 26 und dem Gebläse 114 ein Getriebe 109 vorgesehen. In der Gasturbinenverkleidung 107 ist in einem in Luftströmungsrichtung gesehen dem Gebläse 114 nachgeschalteten Bereich eine Öffnung vorgesehen. Über diese Öffnung kann Luft in den Verdichter 20 der Gasturbine 2 gelangen.

Analog zu der in Fig. 1 besprochenen Wärmekraftmaschine 1 wird in dem Verdichter 20 die Luft verdichtet und in den Freikolbenverdichter 3 geleitet, wobei die verdichtete Luft vor einem Eintritt in den Freikolbenverdichter 3 im ersten Zwischenkühler 50 abgekühlt wird. Das Freikolbenverdichterabgas wird über die Abgasleitung 43 in die Brennkammer 23 geführt und das aus der Brennkammer 23 austretende Brennkammerabgas wird der Turbine 26 zugeführt.

Der Freikolbenverdichter 3 ist in einem Bereich zwischen der Gasturbine 2 bzw. der Gasturbinenverkleidung 107 und der Gondel 110 angeordnet. Die Freikolbenverdicherverkleidung weist in einem Abschnitt, der der Öffnung in der Gasturbinenverkleidung 107 in Luftströmungsrichtung gesehen nachgeschaltet ist, eine Öffnung auf. Durch diese Öffnung kann Luft in den Bereich zwischen der Gasturbinenverkleidung 107 und der Freikolbenverdichterverkleidung einströmen. Die in diesen Bereich eingeströmte Luft wird zum ersten Zwischenkühler 50 geführt und führt dort einen Wärmetausch mit der vom Verdichter 20 zum Freikolbenverdichter geleiteten Luft durch. Vielmehr erwärmt sich die in dem Bereich zwischen Freikolbenverdichterverkleidung und Gasturbinenverkleidung 107 befindliche Luft. Der erste Zwischenkühler 50 ist in Luftströmungsrichtung gesehen hinter dem Freikolbenverdichter 3 angeordnet.

Innerhalb des Flugtriebwerks 100 bilden sich drei unterschiedliche Düsen aus. So bildet sich eine Hauptstromdüse 101 in dem in Luftströmungsrichtung gesehen der Turbine 26 nachgeschalteten Bereich aus. Durch die Hauptstromdüse 101 tritt der sich in der Gasturbine 2 befindliche Lufthauptstrom aus dem Flugtriebwerk aus. Des Weiteren bildet sich zwischen der Gondel 110 und der Freikolbenverdichterverkleidung bzw. der Gasturbinenverkleidung 108 eine Nebenstromdüse 102 aus. Durch die Nebenstromdüse 102 tritt ein Luftnebenstrom aus dem Flugtriebwerk 100 aus. Der Luftnebenstrom entspricht dem durch das Gebläse 114 angesaugten Luftstrom, der nicht in die Gasturbine 2 und/ oder für den ersten Zwischenkühler 50 abgezweigt wurde. Ferner bildet sich in einem Abschnitt, der in Luftströmungsrichtung gesehen dem ersten Zwischenkühler 50 nachgeschaltet ist, zwischen der Gasturbinenverkleidung 108 und der Freikolbenverdichterverkleidung eine Zwischendüse 103 aus. Durch die Zwischendüse 103 tritt der sich in dem ersten Zwischenkühler 50 erwärmte Zwischenkühlerluftstrom aus dem Flugtriebwerk 100 aus.

Nebenaggregate der Gasturbine 2 sind entlang des Umfangs der Gasturbine 2 an dieser angeordnet. Vielmehr sind die Nebenaggregate in einem Bereich an der Gasturbine 2 angeordnet, der sich in Luftströmungsrichtung gesehen vor den Freikolbenverdichtern 3 befindet. Des Weiteren ist an der Gasturbine 2 ein Vorsatzläufer 115 angebracht. Dabei ist der Vorsatzläufer 115 in einem Bereich angeordnet, der sich in Luftströmungsrichtung gesehen vor dem Gebläse 114 befindet. Der erste Abgaswärmetauscher 60, in dem ein Wärmetausch zwischen dem Turbinenabgas und einem Anteil des vom Verdichterkolben geförderten Luftstroms erfolgt, ragt in einen Abschnitt der Hauptstromdüse 101.

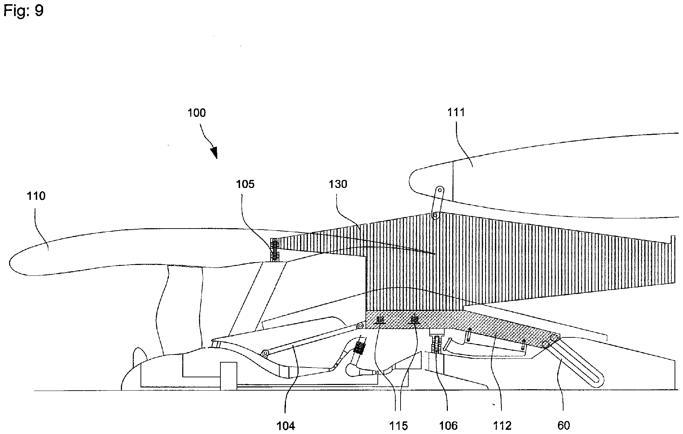

Aus Fig. 9 ist ersichtlich, dass im Flugtriebwerk ein Pylon 130 vorgesehen ist, der mit einem Flügel 111 und der Gondel 110 gekoppelt ist. Des Weiteren ist der Pylon 130 mit einer Tragstruktur 112 gekoppelt. Die Tragstruktur 112 weist eine Freikolbenverdichterbefestigung 115 auf, an der der in Fig. 7 nicht gezeigte Freikolbenverdichter 3 befestigt ist. Des Weiteren weist die Tragstruktur eine Befestigung für den ersten Abgaswärmetauscher 60 und den ersten Zwischenkühler 50 zum Befestigen des ersten Abgaswärmetauschers 60 und des ersten Zwischenkühlers 50 auf. Ferner wird ein Schubübertragungslenker 104 an der Tragstruktur 112 befestigt.

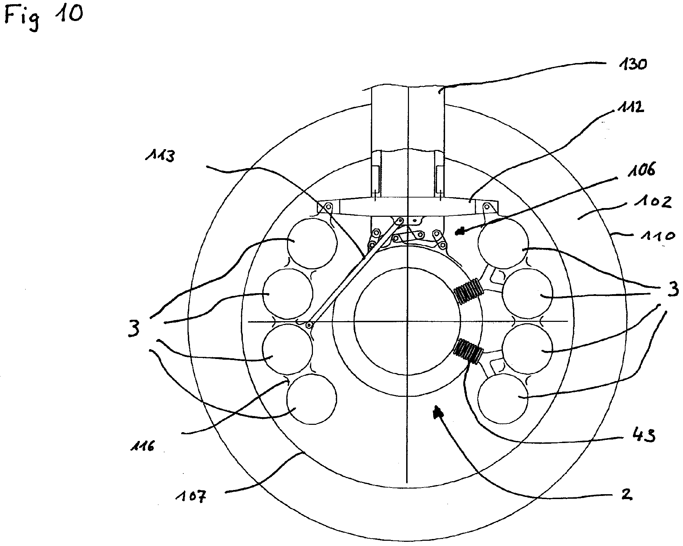

Die Gasturbine wird über eine vordere Aufhängung 105 mit dem Gebläsegehäuse und über eine hintere Aufhängung 106 an der Tragstruktur 112 befestigt
Fig. 10 zeigt eine Hinteransicht auf ein Flugtriebwerk 100 mit Flügel 111 und Freikolbenverdichter 3 gemäß einer ersten Ausführung der Erfindung entlang des Schnitts A-A aus Fig. 8. In dem in Fig. 10 gezeigten Flugtriebwerk 100 wird die Gasturbine 2 über den Pylon 130 mit dem Flügel 111 gekoppelt. Innerhalb des Flügels 111 sind insgesamt acht Freikolbenverdichter 3 angeordnet.

Insgesamt vier Freikolbenverdichter 3 bilden jeweils eine Gruppe von Freikolbenverdichtern 3. Die zwei Gruppen von Freikolbenverdichtern 3 sind in zwei unterschiedlichen Bereichen des Flügels 111 angeordnet, wobei zwischen den Bereichen der Pylon 130 vorgesehen ist. In dem Pylon 130 ist eine Zuführleitung vorgesehen, mittels der den Freikolbenverdichtern 3 die in dem Verdichter der Gasturbine 2 verdichtete Luft zugeführt wird. Ferner ist in dem Pylon 130 eine Abführleitung 132 vorgesehen, über die das Freikolbenverdichterabgas und die Kühlluft für die zu kühlenden Gasturbinenteile in die Gasturbine 2 strömt.

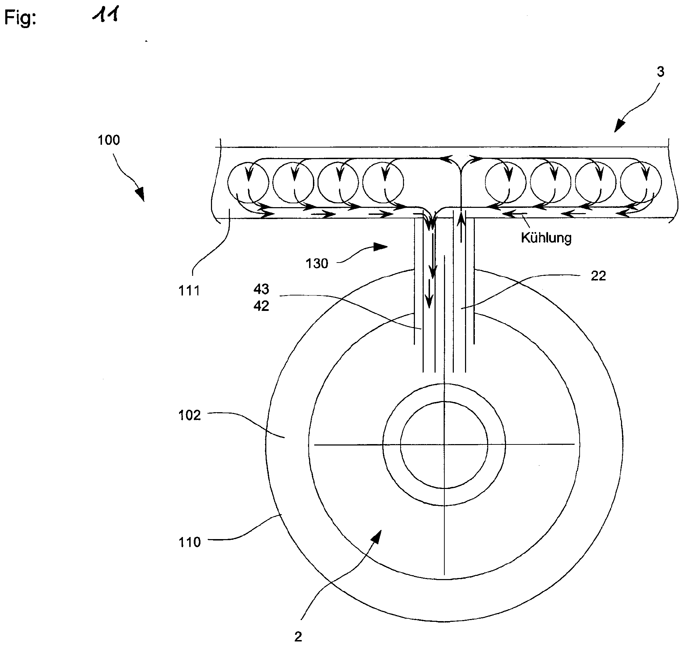

Fig. 11 zeigt eine Hinteransicht auf ein Flugtriebwerk 100 mit Freikolbenverdichtern 3 gemäß einer zweiten Ausführung der Erfindung entlang des Schnitts A-A aus Fig. 8. Analog wie bei dem in Fig. 10 gezeigten Flugtriebwerk 100 ist die Gasturbine 2 mit dem Pylon 130 gekoppelt. Im Unterschied zu dem in Fig. 10 gezeigten Flugtriebwerk 100 sind die Freikolbenverdichter 3 entlang des Umfangs der Gasturbine 2 angeordnet und nicht in einem Flügel vorgesehen. Dabei bilden vier Freikolbenverdichter 3 jeweils eine Gruppe. Die einzelnen Freikolbenverdichter 3 einer Gruppe sind mittels Verbindungselementen 116 (siehe Fig. 10) miteinander gekoppelt. Die einzelnen Freikolbenverdichter 3 der jeweiligen Gruppe sind in ungefähr dem gleichen radialen Abstand von der Gasturbinenachse entfernt.

Die beiden Gruppen von Freikolbenverdichtern 3 werden an einem ihrer Enden an der Tragstruktur 112 befestigt. Die Tragstruktur 112 ist mit dem Pylon 130 gekoppelt. Des Weiteren können die Gruppen der Freikolbenverdichter 3 über eine Abstützung 113 mit der Tragstruktur 112 gekoppelt sein.

Ein Teil des in das Flugtriebwerk 100 über das Gebläse 114 angesaugten Luftstroms wird über die Öffnung in der Gasturbinenverkleidung 108 zur Gasturbine geführt. Der Lufthauptstrom strömt durch die Gasturbine bzw. den Freikolbenverdichter 3 und strömt über die Hauptstromdüse 101 aus dem Flugtriebwerk. Des Weiteren wird ein anderer Teil des durch das Gebläse 114 angesaugten Luftstroms über die Öffnung der Freikolbenverdichterverkleidung zum ersten Zwischenkühler 50 geführt. Beim Durchströmen des ersten Zwischenkühlers 50 wird der Zwischenkühlerluftstrom erwärmt und tritt über die Zwischendüse 103 aus dem Flugtriebwerk 100 aus. Der nicht abgezweigte Luftnebenstrom des durch das Gebläse angesaugten Luftstroms tritt über die Nebenstromdüse 102 aus dem Flugtriebwerk aus.

## Patentansprüche

1. Wärmekraftmaschine (1) mit einer Turbomaschine (2), insbesondere einer Gasturbine, die mindestens einen Verdichter (20, 21), eine Brennkammer (23), mindestens eine Turbine (25, 26) und wenigstens einen Freikolbenverdichter (3) aufweist, wobei der wenigstens eine Freikolbenverdichter (3), der mit der Turbomaschine (2) gekoppelt ist, wenigstens einen Verdichterkolben (30) und wenigstens einen Zylinder mit Zylinderraum (31) und mindestens einem Motorkolben (32) aufweist, wobei ein Teil des durch den Verdichterkolben (30) geförderten Fluids, insbesondere Luft, dem Zylinderraum (31) zugeführt wird und ein anderer Teil des Fluids zum Temperieren der Brennkammer (23) und oder Turbine (25, 26)) vorgesehen ist **gekennzeichnet durch** eine Zylinderleitung (40), die einen Verdichtungsraum (33) des Freikolbenverdichters (3) mit dem Zylinderraum (31) verbindet, und eine Turbomaschinenleitung (42, 43), die den Freikolbenverdichter (3) mit zumindest einem Turbomaschinenteil verbindet, wobei zumindest ein Teil des in der Zylinderleitung (40) befindlichen Fluids den Freikolbenverdichter (3), insbesondere den Zylinder, einen Zylinderkopf, ein Einlass- und/ oder Auslassventil und/oder, den Motorkolben (32), kühlt und dann über die Turbomaschinenleitung (42, 43) um die Brennkammer (23) und/ oder um die Turbine (26), geleitet wird.

2. Wärmekraftmaschine (1) nach Anspruch 1, **gekennzeichnet durch** einen zweiten Verdichter (21), wobei zwischen dem zweiten Verdichter (21) und dem Freikolbenverdichter (3) ein erster Zwischenkühler (50) angeordnet ist.

3. Wärmekraftmaschine (1) nach Anspruch 1, **gekennzeichnet durch** einen zweiten Zwischenkühler (52), der in der Zylinderleitung (40) angeordnet ist.

4. Wärmekraftmaschine (1) nach einem der vorhergehenden Ansprüche, **dadurch gekennzeichnet, dass** die Zylinderleitung (40) den Verdichtungsraum (33) mit dem Turbomaschinenteil, insbesondere der Brennkammer (23) und/ oder Turbine (26), verbindet.

5. Wärmekraftmaschine (1) nach einem der vorhergehenden Ansprüche 1 bis 4, **gekennzeichnet durch** eine Brennkammerausgleichskammer (24), insbesondere eine Ringleitung, die mit der Brennkammer (23) verbunden ist, wobei die Zylinderleitung (40) und die Turbomaschinenleitung (42, 43) an ihrem von dem Freikolbenverdichter (3) entfernten Ende mit der Brennkammerausgleichskammer (24) verbunden sind.

6. Wärmekraftmaschine (1) nach einem der vorhergehenden Ansprüche 1 bis 5, **dadurch gekennzeichnet, dass** die Turbomaschinenleitung mindestens eine Kühlleitung (42A ,42B, 42C) und eine, insbesondere wärmeisolierte, Abgasleitung (43) aufweist, die zueinander konzentrisch sind.

7. Wärmekraftmaschine (1) nach einem der vorhergehenden Ansprüche 1 bis 6, **dadurch gekennzeichnet, dass** in der Turbomaschinenleitung (42, 43) ein elastisches Element, insbesondere ein Kompensator, angeordnet ist.

8. Wärmekraftmaschine (1) nach einem der vorhergehenden Ansprüche, **gekennzeichnet durch** einen ersten Abgaswärmetauscher (60), der an dem von dem Verdichter (20) abgewandten Ende der Turbine (26) angeordnet ist und wenigstens mit dem Verdichtungsraum (33) und dem zu kühlenden Turbomaschinenteil verbunden ist, wobei zumindest ein Teil des aus dem Verdichtungsraum kommenden Fluids in dem ersten Abgaswärmetauscher (60) vorgeheizt wird, bevor das Fluid dem Turbomaschinenteil zugeführt wird.

9. Wärmekraftmaschine (1) nach einem der vorhergehenden Ansprüche, **dadurch gekennzeichnet, dass** ein zweiter Abgaswärmetauscher (61) an dem von dem Verdichter (20) entfernten Ende der Turbine (26) vorgesehen ist, wobei der zweite Abgaswärmetauscher (61) mit dem Verdichter (20) und einer Zusatzturbine (62) verbunden ist.

10. Wärmekraftmaschine (1) nach einem der vorhergehenden Ansprüche, **dadurch gekennzeichnet, dass** der zweite Verdichter (21) mit der zweiten Turbine (26) über eine Niederdruckkühlleitung (44) verbunden ist, wobei ein Teil des Fluids vom zweiten Verdichter (21) zum Kühlen des Turbomaschinenteils, insbesondere der zweiten Turbine (26), eingesetzt wird.

11. Wärmekraftmaschine (1) nach einem der vorhergehenden Ansprüche, **gekennzeichnet durch** ein Freikolbenverdichterpaar, wobei die Freikolbenverdichter (3) derart geregelt werden, dass die Verdichterkolben (30) und Motorkolben (32) der beiden Freikolbenverdichter (3) in Gegenphase schwingen.

12. Wärmekraftmaschine (1) nach einem der vorhergehenden Ansprüche, **dadurch gekennzeichnet, dass** wenigstens zwei Freikolbenverdichter (3) eine Gruppe bilden und die Freikolbenverdichter (3) derart geregelt werden, dass zwei Gruppen in umgekehrter Gegenphase schwingen.

## Claims

1. Heat engine (1) comprising a turbomachine (2), in particular a gas turbine, which has at least one compressor (20, 21), a combustion chamber (23), at least one turbine (25, 26) and at least one free-piston compressor (3), the at least one free-piston compressor (3) which is coupled to the turbomachine (2) having at least one compressor piston (30) and at least one cylinder comprising a cylinder chamber (31) and at least one engine piston (32), part of the fluid, in particular air, which is required by the compressor piston (30) being supplied to the cylinder chamber (31) and another part of the fluid being provided for controlling the temperature of the combustion chamber (23) and/or turbine (25, 26), **characterized by** a cylinder line (40) which connects a compression chamber (33) of the free-piston compressor (3) to the cylinder chamber (31), and a turbomachine line (42, 43) which connects the free-piston compressor (3) to at least one turbomachine part, at least part of the fluid in the cylinder line (40) cooling the free-piston compressor (3), in particular the cylinder, a cylinder head, an inlet and/or outlet valve and/or the engine piston (32), and then being conveyed around the combustion chamber (23) and/or around the turbine (26) via the turbomachine line (42, 43).

2. Heat engine (1) according to claim 1, **characterized by** a second compressor (21), a first intercooler (50) being arranged between the second compressor (21) and the free-piston compressor (3).

3. Heat engine (1) according to claim 1, **characterized by** a second intercooler (52) which is arranged in the cylinder line (40).

4. Heat engine (1) according to any of the preceding claims, **characterized in that** the cylinder line (40) connects the compression chamber (33) to the turbomachine part, in particular the combustion chamber (23) and/or turbine (26).

5. Heat engine (1) according to any of the preceding claims 1 to 4, **characterized by** a combustion chamber compensation chamber (24), in particular a ring line, which is connected to the combustion chamber (23), the cylinder line (40) and the turbomachine line (42, 43) being connected, at their end that is remote from the free-piston compressor (3), to the combustion chamber compensation chamber (24).

6. Heat engine (1) according to any of the preceding claims 1 to 5, **characterized in that** the turbomachine line has at least one cooling line (42A, 42B, 42C) and an, in particular heat-insulated, exhaust gas line (43), which lines are concentric to one another.

7. Heat engine (1) according to any of the preceding claims 1 to 6, **characterized in that** a resilient element, in particular a compensator, is arranged in the turbomachine line (42, 43).

8. Heat engine (1) according to any of the preceding claims, **characterized by** a first exhaust gas heat exchanger (60) which is arranged at the end of the turbine (26) remote from the compressor (20) and is connected at least to the compression chamber (33) and the turbomachine part to be cooled, at least part of the fluid coming out of the compression chamber being preheated in the first exhaust gas heat exchanger (60) before the fluid is supplied to the turbomachine part.

9. Heat engine (1) according to any of the preceding claims, **characterized in that** a second exhaust gas heat exchanger (61) is provided at the end of the turbine (26) that is remote from the compressor (20), the second exhaust gas heat exchanger (61) being connected to the compressor (20) and an auxiliary turbine (62).

10. Heat engine (1) according to any of the preceding claims, **characterized in that** the second compressor (21) is connected to the second turbine (26) via a low-pressure cooling line (44), part of the fluid from the second compressor (21) being used to cool the turbomachine part, in particular the second turbine (26).

11. Heat engine (1) according to any of the preceding claims, **characterized by** a free-piston compressor pair, the free piston compressors (3) being controlled such that the compressor piston (30) and engine piston (32) of the two free-piston compressors (3) oscillate in phase opposition.

12. Heat engine (1) according to any of the preceding claims, **characterized in that** at least two free-piston compressors (3) form a group and the free-piston compressors (3) are controlled such that two groups oscillate in reverse phase opposition.

## Revendications

1. Moteur thermique (1) comportant une turbomachine (2), en particulier une turbine à gaz, présentant au moins un compresseur (20,21), une chambre de combustion (23), au moins une turbine (25, 26) et au moins un compresseur à piston libre (3), l'au moins un compresseur à piston libre (3) accouplé à la turbomachine (2) présentant au moins un piston de compresseur (30) et au moins un cylindre comportant un espace de cylindre (31) et au moins un piston de moteur (32), une partie du fluide, en particulier de l'air, requis par le piston de compresseur (30) étant acheminée vers l'espace de cylindre (31) et une autre partie du fluide étant prévue pour tempérer la chambre de combustion (23) et/ou la turbine (25, 26), **caractérisé par** une conduite de cylindre (40) qui relie un espace de compression (33) du compresseur à piston libre (3) à l'espace de cylindre (31), et par une conduite de turbomachine (42, 43) reliant le compresseur à piston libre (3) à au moins une pièce de turbomachine, au moins une partie du fluide se trouvant dans la conduite de cylindre (40) refroidissant le compresseur à piston libre (3), en particulier le cylindre, une culasse, une soupape d'entrée et/ou de sortie et/ou le piston de moteur (32), et étant ensuite dirigée par l'intermédiaire de la conduite de turbomachine (42, 43) autour de la chambre de combustion (23) et/ou de la turbine (26).

2. Moteur thermique (1) selon la revendication 1, **caractérisé par** un second compresseur (21), un premier refroidisseur intermédiaire (50) étant disposé entre le second compresseur (21) et le compresseur à piston libre (3).

3. Moteur thermique (1) selon la revendication 1, **caractérisé par** un second refroidisseur intermédiaire (52) disposé dans la conduite de cylindre (40).

4. Moteur thermique (1) selon l'une des revendications précédentes, **caractérisé en ce que** la conduite de cylindre (40) relie l'espace de compression (33) à la pièce de turbomachine, en particulier à la chambre de combustion (23) et/ou à la turbine (26).

5. Moteur thermique (1) selon l'une des revendications précédentes 1 à 4, **caractérisé par** une chambre de compensation de chambre de combustion (24), en particulier une conduite annulaire, qui est reliée à la chambre de combustion (23), la conduite cylindrique (40) et la conduite de turbomachine (42, 43) étant reliées à leur extrémité opposée au compresseur à piston libre (3) à la chambre de compensation de chambre de combustion (24).

6. Moteur thermique (1) selon l'une des revendications précédentes 1 à 5, **caractérisé en ce que** la conduite de turbomachine présente au moins une conduite de refroidissement (42A, 42B, 42C) et une conduite de gaz d'échappement (43), en particulier isolée thermiquement, qui sont concentriques l'une par rapport à l'autre.

7. Moteur thermique (1) selon l'une des revendications précédentes 1 à 6, **caractérisé en ce qu'**un élément élastique, en particulier un compensateur, est disposé dans la conduite de turbomachine (42, 43).

8. Moteur thermique (1) selon l'une des revendications précédentes, **caractérisé par** un premier échangeur thermique de gaz d'échappement (60) disposé à l'extrémité de la turbine (26) éloignée du compresseur (20) et relié au moins à l'espace de compression (33) et à la pièce de turbomachine à refroidir, au moins une partie du fluide provenant de l'espace de compression étant préchauffée dans le premier échangeur thermique de gaz d'échappement (60) avant l'acheminement du fluide vers la pièce de turbomachine.

9. Moteur thermique (1) selon l'une des revendications précédentes, **caractérisé en ce qu'**un second échangeur thermique de gaz d'échappement (61) est prévu à l'extrémité de la turbine (26) éloignée du compresseur (20), le second échangeur thermique de gaz d'échappement (61) étant relié au compresseur (20) et à une turbine auxiliaire (62).

10. Moteur thermique (1) selon l'une des revendications précédentes, **caractérisé en ce que** le second compresseur (21) est relié à la seconde turbine (26) par l'intermédiaire d'une conduite de refroidissement basse pression (44), une partie du fluide provenant du second compresseur (21) permettant de refroidir la pièce de turbomachine, en particulier la seconde turbine (26).

11. Moteur thermique (1) selon l'une des revendications précédentes, **caractérisé par** une paire de compresseurs à piston libre, les compresseurs à piston libre (3) étant réglés de sorte que les pistons de compresseur (30) et les pistons de moteur (32) des deux compresseurs à piston libre (3) oscillent en opposition de phase.

12. Moteur thermique (1) selon l'une des revendications précédentes, **caractérisé en ce qu'**au moins deux compresseurs à piston libre (3) forment un groupe et **en ce que** les compresseurs à piston libre (3) sont réglés de sorte que deux groupes oscillent en opposition de phase dans le sens inverse.
